# EUROPEAN PATENT APPLICATION

(11) **EP 4 780 058 A1**
(43) Date of publication of application: **22.07.2026**
(21) Application number: 24884574.5
(22) Date of filing: 24.10.2024
(51) Int. Cl.: H04W 24/08

(54) **COMMUNICATION METHOD, APPARATUS, AND SYSTEM**

(30) Priority: 31.10.2023 CN 202311442845
(71) Applicant: HUAWEI TECHNOLOGIES CO., LTD., Shenzhen 518129 (CN)
(72) Inventor: FU, Yu, Shenzhen, Guangdong 518129 (CN); QIN, Yi, Shenzhen, Guangdong 518129 (CN); CAO, Youlong, Shenzhen, Guangdong 518129 (CN); XU, Rui, Shenzhen, Guangdong 518129 (CN); PANG, Xu, Shenzhen, Guangdong 518129 (CN)
(74) Representative: Isarpatent
(86) International application number: PCT/CN2024/127145
(87) International publication number: WO 2025/092570

(57) **Abstract**

This application relates to a communication method and apparatus, and a system. In the method, a terminal apparatus may perform inter-frequency measurement in a first measurement gap with shorter duration and/or a longer period based on sending of first information used to request a resource or indicating that the terminal apparatus has data to be transmitted. Alternatively, in the method, a terminal apparatus stops performing inter-frequency measurement in a measurement gap based on sending of first information. According to the method, a probability that a transmission occasion of uplink data is located in a measurement gap can be reduced, to reduce impact of the measurement gap on uplink data transmission, so as to reduce a data transmission delay and improve service quality.

## Description

### CROSS-REFERENCE TO RELATED APPLICATIONS

This application claims priority to Chinese Patent Application No. 202311442845.1, filed with the China National Intellectual Property Administration on October 31, 2023 and entitled "COMMUNICATION METHOD AND APPARATUS, AND SYSTEM", which is incorporated herein by reference in its entirety.

### TECHNICAL FIELD

This application relates to the field of communication technologies, and in particular, to a communication method and apparatus, and a system.

### BACKGROUND

In recent years, with continuous advancement and refinement of extended reality (extended reality, XR) technologies, related industries have developed vigorously. Nowadays, extended reality has entered various fields closely related to production and life of people, including education, entertainment, defense, healthcare, environmental protection, transportation, and public health. As a new type of service, multi-modal services built upon XR add the dimension of haptic experience, enabling remote touch and remote manipulation, and realizing remote sensing across vision, auditory, tactility, and kinesthetics. Therefore, such multi-modal services hold tremendous development potential in areas such as industrial automation, healthcare, and remote education, providing comprehensive interactive experience for users and offering great application value.

Remote sensing in various domains typically depend on mobile communication networks. In the mobile communication networks, when a user equipment (user equipment, UE) moves from one cell to another cell, cell handover is required. Before the handover, the UE needs to measure signals of neighboring cells to determine a target cell. To enable the UE to measure inter-frequency neighboring cells, the network configures a measurement gap (measurement gap, MG) for the UE. Within the measurement gap, the UE is handed over to a frequency on which a to-be-measured cell is located for measurement. Because the frequency of the to-be-measured cell is different from a frequency of a serving cell of the UE, the UE cannot receive or send data in the serving cell within the measurement gap.

Therefore, because the UE cannot receive or send data in the serving cell within the measurement gap, transmission of data that should be originally transmitted within the measurement gap is delayed. As a result, a data transmission delay is high, and latency-sensitive services like XR video services or haptic services are greatly affected.

### SUMMARY

Embodiments of this application provide a communication method and apparatus, and a system, to reduce impact of a measurement gap on uplink data transmission, reduce a data transmission delay, and improve service quality.

According to a first aspect, a communication method is provided. The method may be performed by a terminal apparatus. The terminal apparatus may be a terminal device, may be another device including a function of the terminal device, or may be a chip system (or a chip) or another functional module. The chip system or the functional module can implement the function of the terminal device. The chip system or the functional module is, for example, disposed in the terminal device. The method includes: The terminal apparatus determines first configuration information, where the first configuration information is used to configure a first measurement gap, and the first measurement gap and a second measurement gap are used for inter-frequency measurement; and duration of the first measurement gap is less than duration of the second measurement gap, and/or a period of the first measurement gap is greater than a period of the second measurement gap. The terminal apparatus sends first information to a network apparatus, where the first information is used to request a resource or indicates that the terminal apparatus has data to be transmitted. The terminal apparatus performs inter-frequency measurement in the first measurement gap based on sending of the first information.

In embodiments of this application, the first measurement gap with shorter duration and/or a longer period is newly defined. When the terminal apparatus has to-be-sent uplink data, the terminal apparatus may perform inter-frequency measurement in the first measurement gap, instead of performing inter-frequency measurement in the second measurement gap. The first measurement gap has shorter duration and/or a longer period than the second measurement gap. Therefore, a probability that a transmission occasion of the uplink data is located in the first measurement gap is lower, to reduce impact of the measurement gap on uplink data transmission, so as to reduce a transmission delay of the uplink data. Alternatively, because the first measurement gap has shorter duration and/or a longer period, it is equivalent to that the first measurement gap occupies fewer time domain resources in a time period, and more time domain resources can be provided for uplink data transmission, thereby preferentially ensuring data transmission. For example, for a service like an XR video service or a haptic service that has a high delay requirement, impact of inter-frequency measurement on service data transmission can be reduced, and a transmission delay can be reduced, thereby improving service quality.

In an optional implementation, before sending the first information to the network device, the terminal apparatus may further perform inter-frequency measurement in the second measurement gap. For example, the terminal apparatus originally performs inter-frequency measurement in the second measurement gap. After the terminal apparatus sends the first information, the terminal apparatus changes to perform inter-frequency measurement in the first measurement gap instead of performing inter-frequency measurement in the second measurement gap. The first measurement gap has shorter duration and/or a longer period than the second measurement gap, so that impact of the measurement gap on uplink data transmission is reduced.

In an optional implementation, after sending the first information to the network apparatus, the terminal apparatus may further receive first indication information from the network apparatus. The first indication information is sent by the network apparatus based on the first information, and the first indication information indicates the terminal apparatus to perform inter-frequency measurement in the first measurement gap. The terminal apparatus performs inter-frequency measurement in the first measurement gap based on the first indication information. In this implementation, the terminal apparatus may perform inter-frequency measurement in the first measurement gap through an indication of the network apparatus. In other words, the terminal apparatus needs to perform inter-frequency measurement in the first measurement gap under the indication of the network apparatus. This can avoid an out-of-synchronization case in which the network apparatus fails to receive the first information while the terminal apparatus has performed inter-frequency measurement in the first measurement gap, and improve consistency of measurement gap configurations between the network apparatus and the terminal apparatus.

In an optional implementation, the first indication information is included in downlink control information (downlink control information, DCI), the DCI includes a first bit, and when the first bit is a first value, it indicates the terminal apparatus to perform inter-frequency measurement in the first measurement gap. In this implementation, the first bit may indicate the terminal apparatus to perform inter-frequency measurement in the first measurement gap, to reduce complexity of a configuration process and reduce signaling overheads.

In an optional implementation, the first configuration information is further used to configure first duration, and the first duration indicates duration for which the terminal apparatus performs inter-frequency measurement in the first measurement gap. For example, the terminal apparatus performs inter-frequency measurement in the first measurement gap within the first duration based on sending of the first information. In this implementation, the first duration is configured, so that the duration for which the terminal apparatus performs inter-frequency measurement in the first measurement gap is limited within the first duration. This avoids continuously performing inter-frequency measurement in the first measurement gap with shorter duration and/or a longer period for a long time, and can ensure measurement accuracy of the measurement gap. In other words, after the first duration ends, the terminal apparatus may automatically stop performing inter-frequency measurement in the first measurement gap, for example, may change to perform inter-frequency measurement in the second measurement gap, so that the terminal apparatus does not need to be additionally indicated to perform the change, thereby reducing signaling overheads.

In an optional implementation, the first information is a scheduling request (scheduling request, SR). Alternatively, the first information is a buffer status report (buffer status report, BSR), and a data amount indicated by the BSR is greater than 0.

In an optional implementation, a priority of a logical channel carrying the first information is greater than or equal to a first threshold, or a priority of a logical channel carrying the first information is greater than or equal to a priority of at least one other logical channel of a transmission service.

In the foregoing two implementations, the terminal apparatus may use any manner of sending the SR or the BSR or including the first information in the high-priority logical channel as a temporary adjustment condition for a measurement gap configuration. Therefore, no additional indication information or indication message needs to be added, thereby saving signaling resources.

According to a second aspect, a communication method is provided. The method may be performed by a terminal apparatus. The terminal apparatus may be a terminal device, may be another device including a function of the terminal device, or may be a chip system (or a chip) or another functional module. The chip system or the functional module can implement the function of the terminal device. The chip system or the functional module is, for example, disposed in the terminal device. The method includes: The terminal apparatus determines second configuration information, where the second configuration information is used to configure a measurement gap. The terminal apparatus performs inter-frequency measurement in the measurement gap. The terminal apparatus sends first information to a network apparatus, where the first information is used to request a resource or indicates that the terminal apparatus has data to be transmitted. The terminal apparatus stops, based on sending of the first information, performing inter-frequency measurement in the measurement gap.

In this embodiment of this application, after sending the first information, the terminal apparatus may stop performing inter-frequency measurement in the measurement gap. In other words, for a subsequent measurement gap, the terminal apparatus does not switch to a frequency of a to-be-measured cell for measurement, but remains in a current serving cell, and service data transmission is not affected. In addition, because measurement does not need to be performed in the measurement gap, resources at a time domain position in which the measurement gap is located may be used to perform data transmission. This is equivalent to that more resources can be scheduled, so that uplink data transmission of a UE can be ensured to a greater extent, an uplink data transmission delay can be reduced, and service performance can be improved.

In an optional implementation, after sending the first information to the network apparatus, the terminal apparatus may further receive second indication information from the network apparatus. The second indication information is sent by the network apparatus based on the first information, and the second indication information indicates the terminal apparatus to stop performing inter-frequency measurement in the measurement gap. The terminal apparatus stops, based on the second indication information, performing inter-frequency measurement in the measurement gap. In this implementation, the terminal apparatus may stop performing inter-frequency measurement in the measurement gap through an indication of the network apparatus. In other words, the terminal apparatus needs to stop performing inter-frequency measurement under the indication of the network apparatus. This can avoid an out-of-synchronization case in which the network apparatus fails to receive the first information while the terminal apparatus has stopped performing inter-frequency measurement, and improve consistency of measurement gap configurations between the network apparatus and the terminal apparatus.

In an optional implementation, the second indication information is included in DCI, the DCI includes a second bit, and when the second bit is a second value, it indicates the terminal apparatus to stop performing inter-frequency measurement in the measurement gap. In this implementation, the second bit may indicate to stop performing inter-frequency measurement in the measurement gap, to reduce complexity of a configuration process and reduce signaling overheads.

In an optional implementation, the second configuration information is further used to configure second duration, and the second duration indicates duration for which inter-frequency measurement is stopped in the measurement gap. For example, based on sending of the first information, the terminal apparatus stops, within the second duration, performing inter-frequency measurement in the measurement gap. In this implementation, the second duration is configured, so that the duration for which the terminal apparatus stops inter-frequency measurement is limited within the second duration. This avoids a case in which a cell handover cannot be performed because inter-frequency measurement is continuously stopped for a long time. For example, after the second duration ends, the terminal apparatus may automatically change to continue to perform inter-frequency measurement in the measurement gap, so that the terminal apparatus does not need to be additionally indicated to perform the change, thereby reducing signaling overheads.

In an optional implementation, the first information is an SR. Alternatively, the first information is a BSR, and a data amount indicated by the BSR is greater than 0.

In an optional implementation, a priority of a logical channel carrying the first information is greater than or equal to a first threshold, or a priority of a logical channel carrying the first information is greater than or equal to a priority of at least one other logical channel of a transmission service.

In the foregoing two implementations, the terminal apparatus may use any manner of sending the SR or the BSR or including the first information in the high-priority logical channel as a temporary adjustment condition for a measurement gap configuration. Therefore, no additional indication information or indication message needs to be added, thereby saving signaling resources.

According to a third aspect, a communication method is provided. The method may be performed by a network apparatus. The network apparatus may be a radio access network device, may be another device including a function of the radio access network device, may be a chip system (or a chip) or another functional module, where the chip system or the functional module can implement the function of the radio access network device, and the chip system or the functional module is, for example, disposed in the radio access network device, or may be a logical node, a logical module, or software that implements all or some functions of the access network device. The method includes: The network apparatus sends first configuration information to a terminal apparatus, where the first configuration information is used to configure a first measurement gap, and the first measurement gap and a second measurement gap are used for inter-frequency measurement. Duration of the first measurement gap is less than duration of the second measurement gap, and/or a period of the first measurement gap is greater than a period of the second measurement gap.

In an optional implementation, the network apparatus receives first information from the terminal apparatus, where the first information is used to request a resource or indicates that the terminal apparatus has data to be transmitted. The network apparatus sends first indication information to the terminal apparatus based on the first information, where the first indication information indicates the terminal apparatus to perform inter-frequency measurement in the first measurement gap.

In an optional implementation, the first indication information is included in DCI, the DCI includes a first bit, and when the first bit is a first value, it indicates the terminal apparatus to perform inter-frequency measurement in the first measurement gap.

In an optional implementation, the first configuration information is further used to configure first duration, and the first duration indicates duration for which the terminal apparatus performs inter-frequency measurement in the first measurement gap.

In an optional implementation, the first information is a scheduling request SR. Alternatively, the first information is a BSR, and a data amount indicated by the BSR is greater than 0.

In an optional implementation, a priority of a logical channel carrying the first information is greater than or equal to a first threshold, or a priority of a logical channel carrying the first information is greater than or equal to a priority of at least one other logical channel of a transmission service.

For technical effects brought by the third aspect or the optional implementations, refer to the descriptions of the technical effects of the first aspect or the corresponding implementations.

According to a fourth aspect, a communication method is provided. The method may be performed by a network apparatus. The network apparatus may be a radio access network device, may be another device including a function of the radio access network device, may be a chip system (or a chip) or another functional module, where the chip system or the functional module can implement the function of the radio access network device, and the chip system or the functional module is, for example, disposed in the radio access network device, or may be a logical node, a logical module, or software that implements all or some functions of the access network device. The method includes: The network apparatus sends second configuration information to a terminal apparatus, where the second configuration information is used to configure a measurement gap, and the measurement gap is used for inter-frequency measurement. The second configuration information is further used to configure second duration, and the second duration indicates duration for which inter-frequency measurement is stopped in the measurement gap.

In an optional implementation, the network apparatus receives first information from the terminal apparatus, where the first information is used to request a resource or indicates that the terminal apparatus has data to be transmitted. The network apparatus sends second indication information to the terminal apparatus, where the second indication information indicates the terminal apparatus to stop performing inter-frequency measurement in the measurement gap.

In an optional implementation, the second indication information is included in DCI, the DCI includes a second bit, and when the second bit is a second value, it indicates the terminal apparatus to stop performing inter-frequency measurement in the measurement gap.

In an optional implementation, the second configuration information is further used to configure second duration, and the second duration indicates duration for which inter-frequency measurement is stopped in the measurement gap.

In an optional implementation, the first information is an SR. Alternatively, the first information is a BSR, and a data amount indicated by the BSR is greater than 0.

In an optional implementation, a priority of a logical channel carrying the first information is greater than or equal to a first threshold, or a priority of a logical channel carrying the first information is greater than or equal to a priority of at least one other logical channel of a transmission service.

For technical effects brought by the fourth aspect or the optional implementations, refer to the descriptions of the technical effects of the second aspect or the corresponding implementations.

According to a fifth aspect, a communication apparatus is provided. The communication apparatus may be the terminal apparatus according to any one of the first aspect to the fourth aspect. The communication apparatus has a function of the foregoing terminal apparatus. The communication apparatus is, for example, the terminal apparatus, or a functional module that implements a function of the terminal apparatus, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to determine first configuration information, where the first configuration information is used to configure a first measurement gap, and the first measurement gap and a second measurement gap are used for inter-frequency measurement; and duration of the first measurement gap is less than duration of the second measurement gap, and/or a period of the first measurement gap is greater than a period of the second measurement gap. The transceiver unit (or the sending unit) is configured to send first information to a network apparatus, where the first information is used to request a resource or indicates that terminal apparatus has data to be transmitted. The processing unit is further configured to perform inter-frequency measurement in the first measurement gap based on sending of the first information.

In an optional implementation, the processing unit is configured to determine second configuration information, where the second configuration information is used to configure a measurement gap; and is further configured to perform inter-frequency measurement in the measurement gap. The transceiver unit (or the sending unit) is configured to send first information to a network apparatus, where the first information is used to request a resource or indicates that terminal apparatus has data to be transmitted. The processing unit is further configured to stop, based on sending of the first information, performing inter-frequency measurement in the measurement gap.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the terminal apparatus according to any one of the first aspect to the fourth aspect.

According to a sixth aspect, a communication apparatus is provided. The communication apparatus may be the network apparatus according to any one of the first aspect to the fourth aspect. The communication apparatus has a function of the foregoing network apparatus. The communication apparatus is, for example, the network apparatus, or a functional module that implements a function of the network apparatus, for example, a baseband apparatus or a chip system. In an optional implementation, the communication apparatus includes a baseband apparatus and a radio frequency apparatus. In another optional implementation, the communication apparatus includes a transceiver unit (also referred to as a transceiver module sometimes). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to send first configuration information to a terminal apparatus, where the first configuration information is used to configure a first measurement gap, and the first measurement gap and a second measurement gap are used for inter-frequency measurement. Duration of the first measurement gap is less than duration of the second measurement gap, and/or a period of the first measurement gap is greater than a period of the second measurement gap.

In an optional implementation, the transceiver unit (or the sending unit) is configured to send second configuration information to the terminal apparatus, where the second configuration information is used to configure a measurement gap, and the measurement gap is used for inter-frequency measurement. The second configuration information is further used to configure second duration, and the second duration indicates duration for which inter-frequency measurement is stopped in the measurement gap.

In an optional implementation, the communication apparatus further includes a processing unit (sometimes also referred to as a processing module) and a storage unit (sometimes also referred to as a storage module). The processing unit is configured to: be coupled to the storage unit, and execute a program or instructions in the storage unit, to enable the communication apparatus to perform a function of the terminal apparatus according to any one of the first aspect to the fourth aspect.

According to a seventh aspect, a communication apparatus is provided. The communication apparatus may be a terminal apparatus, or may be a chip or a chip system used in the terminal apparatus. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the terminal apparatus in the foregoing aspects.

According to an eighth aspect, a communication apparatus is provided. The communication apparatus may be a network apparatus, or may be a chip or a chip system used in the network device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the network apparatus in the foregoing aspects.

According to a ninth aspect, a communication system is provided, including a terminal apparatus and a network apparatus. The terminal apparatus is configured to perform the method performed by the terminal apparatus according to the first aspect, and the network apparatus is configured to perform the method performed by the network apparatus according to the third aspect. For example, the terminal apparatus may be implemented by the communication apparatus according to the fifth aspect or the seventh aspect, and the network apparatus may be implemented by the communication apparatus according to the sixth aspect or the eighth aspect.

According to a tenth aspect, another communication system is provided, including a terminal apparatus and a network apparatus. The terminal apparatus is configured to perform the method performed by the terminal apparatus according to the second aspect, and the network apparatus is configured to perform the method performed by the network apparatus according to the fourth aspect. For example, the terminal apparatus may be implemented by the communication apparatus according to the fifth aspect or the seventh aspect, and the network apparatus may be implemented by the communication apparatus according to the sixth aspect or the eighth aspect.

According to an eleventh aspect, a computer-readable storage medium is provided. The computer-readable storage medium is configured to store a computer program or instructions. When the computer program or the instructions are run, the method performed by the terminal apparatus or the network apparatus in the foregoing aspects is implemented.

According to a twelfth aspect, a computer program product including instructions is provided. When the computer program product runs on a computer, the methods in the foregoing aspects are implemented.

According to a thirteenth aspect, a chip system is provided, and includes a processor and an interface. The processor is configured to: invoke instructions from the interface and run the instructions, to cause the chip system to implement the methods in the foregoing aspects.

### BRIEF DESCRIPTION OF DRAWINGS

FIG. 1 is a diagram of an architecture of a communication system to which an embodiment of this application is applied;
FIG. 2 is a scenario diagram of a multi-modal service scenario;
FIG. 3 is a diagram of impact of a measurement gap on an XR video service and a haptic service according to an embodiment of this application;
FIG. 4 is a schematic flowchart of a communication method according to an embodiment of this application;
FIG. 5 is another schematic flowchart of a communication method according to an embodiment of this application;
FIG. 6 is still another schematic flowchart of a communication method according to an embodiment of this application;
FIG. 7 is yet another schematic flowchart of a communication method according to an embodiment of this application;
FIG. 8A to FIG. 8C are example diagrams in which a UE performs uplink transmission according to an embodiment of this application;
FIG. 9 is a schematic flowchart of another communication method according to an embodiment of this application;
FIG. 10 is another schematic flowchart of another communication method according to an embodiment of this application;
FIG. 11 is still another schematic flowchart of another communication method according to an embodiment of this application;
FIG. 12 is yet another schematic flowchart of another communication method according to an embodiment of this application;
FIG. 13 is an example diagram in which a UE performs uplink transmission according to an embodiment of this application;
FIG. 14 is a diagram of an apparatus according to an embodiment of this application; and
FIG. 15 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings. It is clear that the described embodiments are merely some but not all of embodiments of this application. The terms "first" and "second", corresponding term numbers, and the like in this specification, the claims, and the accompanying drawings of this application are used for distinguishing between similar objects, and are not necessarily used for describing a specific sequence or order. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Technical solutions provided in embodiments of this application may be applied to various communication systems, for example, may be applied to a 4th generation (4th generation, 4G) system or a long term evolution (long term evolution, LTE) system, or may be applied to a 5th generation (5th generation, 5G) system, for example, a new radio (new radio, NR) system. Alternatively, the technical solutions may be applied to another wireless communication system, for example, a future mobile communication system or another similar communication system, for example, a 6th generation (6th generation, 6G) system. This is not specifically limited in embodiments of this application. In addition, the technical solutions provided in embodiments of this application may be applied to a sidelink (sidelink, SL). For example, the SL belongs to a device-to-device (device-to-device, D2D) scenario, for example, an NR-D2D scenario; or belongs to a vehicle-to-everything (vehicle-to-everything, V2X) scenario, for example, an NR-V2X scenario. For example, embodiments of this application may be applied to a field like factory manufacturing, whole-house intelligence, intelligent driving, assisted driving, intelligent connected vehicles, or an indoor commercial scenario.

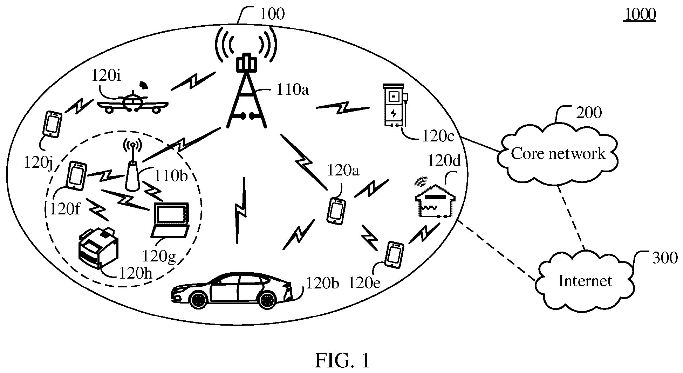

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be different independent physical devices, or functions of the core network device and logical functions of the radio access network device may be integrated into a same physical device, or a part of functions of the core network device and a part of functions of the radio access network device may be integrated into one physical device. Terminal devices may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device. This is not shown in FIG. 1.

In embodiments of this application, a network apparatus is a communication apparatus configured to implement a function of a network device, and the communication apparatus may be the network device, or may be an apparatus that can support the network device in implementing the function, for example, a chip system, where the apparatus may be installed in the network device. The network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. Alternatively, the RAN may be an open radio access network (open RAN, O-RAN or ORAN), a cloud radio access network (cloud radio access network, CRAN), or a communication network of two or more of the foregoing networks. For example, the RAN device may be an evolved NodeB (NodeB or eNB) in an LTE communication system, a base station (gNodeB or gNB) or a transmission reception point (Transmission Reception Point, TRP) in an NR communication system, a next generation base station in a 6G mobile communication system, a base station in a future mobile communication system, an access node in a Wi-Fi system, a wireless relay node, a wireless backhaul node, or the like. The base station may be a macro base station, a micro base station, a pico base station, a small cell, a relay station, a balloon station, or the like. Alternatively, the network device may be a server, a wearable device, a vehicle-mounted device, or the like.

The RAN device may alternatively be a module or unit that completes some functions of the base station, for example, a central unit (central unit, CU), a distributed unit (distributed unit, DU), or a radio unit (radio unit, RU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of the software module and the hardware module. The network device may be a macro base station (for example, 110a in FIG. 1), may be a micro base station or an indoor base station (for example, 110b in FIG. 1), or may be a relay node, a donor node, or the like. A specific technology used by the network device and a specific device form of the network device are not limited in embodiments of this application.

The terminal device is a device having a wireless transceiver function, and may send a signal to the base station, or receive a signal from the base station. The terminal device may also be referred to as a terminal, a user equipment (user equipment, UE), a mobile station, a mobile terminal, an access station, a UE station, a remote station, a wireless communication device, a user apparatus, or the like. The terminal device may be a fixed device, a mobile device, a handheld device, a wearable device, or a vehicle-mounted device, for example, may be a mobile phone, a tablet computer, a computer with a wireless transceiver function, a wearable device, a vehicle, an airplane, a ship, a robot, a mechanical arm, a smart home device, a haptic terminal device, a vehicle-mounted terminal device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: a sensing scenario, cellular communication, device-to-device communication (device-to-device, D2D), vehicle-to-everything (vehicle-to-everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, transportation safety (transportation safety), smart wearables, smart transportation, smart city (smart city), a smart home (smart home), an uncrewed aerial vehicle, a robot, and indoor commercial scenarios (for example, mobile phone projection, file sharing, and video transmission from mobile phones to VR glasses). A specific technology used by the UE and a specific device form of the UE are not limited in embodiments of this application.

In embodiments of this application, a terminal apparatus is a communication apparatus configured to implement a function of the terminal device, and the communication apparatus may be the terminal device, or may be an apparatus that can support the terminal device in implementing the function, for example, a chip system, where the apparatus may be installed in the terminal device. In the technical solutions provided in embodiments of this application, an example in which the terminal apparatus is the terminal device is used to describe the technical solutions provided in embodiments of this application. In addition, for ease of description, an example in which the terminal device is a UE is used for description in embodiments of this application.

The base station and the UE may be at fixed positions, or may be movable. The base station and the UE may be deployed on land, including an indoor or outdoor scenario and a handheld or vehicle-mounted scenario, or may be deployed on water, or may be deployed on an airplane, a balloon, or an artificial satellite. Application scenarios of the base station and the UE are not limited in embodiments of this application.

Roles of the base station and the UE may be relative. For example, a helicopter or an uncrewed aerial vehicle 120i in FIG. 1 may be configured as a mobile base station. For a UE 120j accessing the radio access network 100 over 120i, the UE 120i is a base station. However, for the base station 110a, 120i is UE, that is, communication between 110a and 120i is performed according to a radio air interface protocol. Certainly, communication between 110a and 120i may alternatively be performed according to an interface protocol between base stations. In this case, for 110a, 120i is also a base station. Therefore, the base station and the UE may be collectively referred to as communication apparatuses, 110a and 110b in FIG. 1 each may be referred to as a communication apparatus having a base station function, and 120a to 120j in FIG. 1 each may be referred to as a communication apparatus having a UE function.

Communication between the base station and the UE, between base stations, or between UEs may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios such as a smart grid, industrial control, smart transportation, and a smart city. A function of the UE may alternatively be performed by a module (for example, a chip or a modem) in the UE, or may be performed by an apparatus including the UE function.

In this application, the base station sends a downlink signal or downlink information to the UE, where the downlink information is carried on a downlink channel; and the UE sends an uplink signal or uplink information to the base station, where the uplink information is carried on an uplink channel. To communicate with the base station, the UE needs to establish a wireless connection to a cell controlled by the base station. The cell to which the UE establishes the wireless connection is referred to as a serving cell of the UE. When communicating with the serving cell, the UE is further interfered by a signal from a neighboring cell.

In embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely used as examples of a downlink data channel, a downlink control channel, an uplink control channel, and an uplink data channel. In different systems and different scenarios, a data channel and a control channel may have different names. This is not limited in embodiments of this application.

The following briefly describes technical concepts in this application.

### 1. Extended reality

The extended reality is a general term of various reality-related technologies, and specifically includes virtual reality (virtual reality, VR), augmented reality (augmented reality, AR), and mixed reality (mixed reality, MR). For example, in the VR technology, a visual and audio scene may be rendered to simulate, as much as possible, sensory stimulation caused by vision and audio to a user in a real world. In the VR technology, the user usually needs to wear a head-mounted display (head-mounted display, HMD), so that a field of view of the user is completely replaced with a simulated visual component. In addition, the user needs to wear a headset to provide accompanying audio for the user. In addition, in VR, head and action tracking usually needs to be performed on the user, to update simulated visual and audio content in time, so that the visual and audio content experienced by the user is consistent with an action of the user. The AR technology mainly refers to provision of additional visual or auditory information or artificially generated content in a real environment perceived by the user. The user may obtain the real environment directly, without intermediate sensing, processing, and rendering, or indirectly, that is, the real environment is transferred via a sensor or the like, and perform further enhancement processing. The MR technology is an advanced form of the AR. One of implementations of the MR technology is inserting some virtual elements into a physical scene, to provide the user with immersive experience in which these virtual elements are a part of a real-world scene.

### 2. Multi-modal service

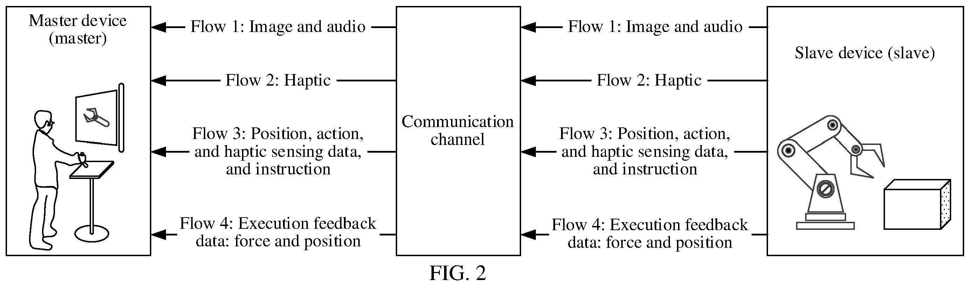

As a new type of service, the multi-modal service built on XR add the dimension of haptic experience, enabling remote touch and remote control, realizing remote sensing across vision, auditory, tactility, and kinesthetics. Therefore, such a service hold tremendous development potential in areas such as industrial automation, healthcare, and remote education, providing comprehensive interactive experience for users and offering great application value and business potential. As shown in FIG. 2, in the multi-modal service, synchronous transmission of a plurality of data flows in multi-sensory control scenarios may be implemented. For example, a synchronously transmitted data flow may include a flow 1 (used to transmit image and audio service data), a flow 2 (used to transmit haptic service data), a flow 3 (used to transmit execution feedback data, for example, force and position service data), and a flow 4 (used to transmit position, action, and haptic sensing data, and instruction service data).

### 3. Measurement gap

In a mobile communication network, when a UE moves from a cell to another cell, handover needs to be performed between the cells. Before the handover, the UE needs to measure signals of neighboring cells to determine a target cell. The measurement gap is configured for measurement. Within the measurement gap, the UE tunes a receiver of the UE to a frequency of the target cell for measurement until the measurement gap ends, and then tunes the receiver to a frequency of a current cell. This process may also be referred to as inter-frequency measurement, and the target cell may also be referred to as an inter-frequency neighboring cell.

In a current 3GPP standard, a configuration parameter of the measurement gap usually includes a measurement gap period (measurement gap repetition period, MGRP), a gap offset (gap offset), and a measurement gap length (Measurement Gap Length, MGL). The MGRP is used to configure a repetition period of a measurement gap. For example, a value of the MGRP includes 20 ms (millisecond, ms), 40 ms, 80 ms, and 160 ms. For example, one frame occupies 10 ms, one frame includes 10 subframes, and one subframe occupies 1 ms. When the MGRP is 40 ms, it indicates that the measurement gap is repeated once every 40 ms, or it is understood as that the measurement gap is repeated once every four frames. The gap offset is used to configure a start subframe when a measurement gap starts, and is used to determine a start subframe of a 1^{st} measurement gap. The gap offset ranges from 0 to (MGRP-1) relative to a period. For example, if a value of the MGRP is 20 ms, a value of gapOffset ranges from 0 to 19. The MGL is used to configure duration of a measurement gap, in milliseconds. For example, a value of the MGL includes 1.5 ms, 3 ms, 3.5 ms, 4 ms, 5.5 ms, and 6 ms.

### 4. XR video signal and haptic signal

Transmission of the XR video signal and the haptic signal has high requirements on both reliability and a delay. For example, in the current 3GPP standard, a transmission reliability requirement of the XR video signal is 99%, a delay requirement of the uplink XR video signal is usually 30 ms, a transmission reliability requirement of an encoded haptic signal is 99.999%, and a delay requirement is 5 ms.

The haptic signal has different features before and after being encoded. Before the haptic signal is encoded, signals generated by each haptic sensor are periodic, 500 to 2000 packets are generated per second, and a size of each packet is 12 to 48 bytes. After haptic encoding is performed on the haptic signal, signals generated by each haptic sensor arrive randomly, a time interval between two signal arrivals complies with generalized Pareto distribution, and a size of each packet that arrives remains unchanged. It should be noted that, although sizes of signal packets generated by each haptic sensor after encoding are the same, in consideration of a case in which one user may simultaneously use a plurality of haptic sensors, because signals generated by each haptic sensor are independent of each other, uplink data that needs to be sent by the user is uneven, in other words, a haptic signal that needs to be sent by the user is an aperiodic signal. Unless otherwise specified, a haptic signal mentioned below is an encoded haptic signal.

It should be noted that, in the following embodiments of this application, a condition that the uplink data needs to meet is not limited, and is applicable to transmission of any uplink data. For example, uplink data transmitted by using a method provided in embodiments of this application may be uplink data that has high requirements on a delay and reliability and that is generated aperiodically. The high requirement on the delay may be understood as that a delay is required to be less than a preset delay threshold, and the high requirement on the reliability may be understood as that reliability is required to be greater than a preset reliability threshold. For example, the uplink data may be an XR video signal and an encoded haptic signal, or other uplink data that is generated aperiodically. This is not limited in this application.

The following briefly describes an existing uplink data transmission solution.

### Solution 1: Dynamic scheduling

In a 5G network, the dynamic scheduling means that a network device uses control signaling in each slot to indicate a UE to send data. In this uplink data transmission solution, a time-frequency resource used for transmitting uplink data may be flexibly allocated based on a service requirement. However, related control signaling is needed for each time of scheduling, and control signaling overheads are high.

For example, when the UE needs to send uplink data, the UE sends an SR to the network device on a PUCCH, to request an uplink grant from the network device. The SR is only used to notify the network device whether there is uplink data to be transmitted, but does not notify the network device of a data amount of the uplink data that needs to be transmitted. After receiving the SR, the network device responds to the SR, and allocates, to the UE, a time-frequency resource, that is, a PUSCH resource, used to transmit the uplink data. In this case, the network device does not learn of an amount of data that needs to be transmitted by the UE. Generally, the network device may perform scheduling on the UE based on a small and fixed data amount. After receiving DCI, the UE sends the uplink data on the PUSCH resource allocated by the network device. The UE may send a BSR on the PUSCH resource, where the BSR is used to notify the network device of an amount of data that still needs to be sent. If the BSR is greater than 0, the network device continues to allocate a PUSCH resource to the UE, and then the UE continues to perform data transmission on the PUSCH resource that is allocated again until the BSR is equal to 0, indicating that sending of data that needs to be transmitted by the UE is completed.

### Solution 2: Uplink pre-scheduling

Different from the dynamic scheduling, the uplink pre-scheduling means that the UE does not need to send an SR, and the network device actively allocates, to the UE, a time-frequency resource used to transmit uplink data. In this way, the UE does not need to send the SR to obtain an uplink grant, thereby reducing a transmission delay and a scheduling loopback delay.

For example, the network device actively sends DCI on a PDCCH, to indicate to allocate, to the UE, the time-frequency resource, that is, a PUSCH resource, used to transmit the uplink data. After receiving the DCI, the UE sends the uplink data on the PUSCH resource allocated by the network device. The UE may send a BSR on the PUSCH resource, where the BSR is used to notify the network device of an amount of data that still needs to be sent. If the BSR is greater than 0, the network device continues to allocate a PUSCH resource to the UE, and then the UE continues to perform data transmission on the PUSCH resource that is allocated again.

Regardless of the foregoing solution 1 and solution 2, during transmission of the XR video signal and the haptic signal, because the UE cannot receive or send data in a serving cell in a measurement gap, transmission of the XR video signal and the haptic signal that are originally sent in the measurement gap are delayed, resulting in high delays of the XR video signal and the haptic signal. However, an XR video service and a haptic service have high requirements on delays, and service performance of such services is greatly affected. Similarly, in addition to the XR video service and the haptic service, for another service that has a high delay requirement and has a specific mobility or positioning measurement requirement, a measurement gap also greatly affects performance of the service.

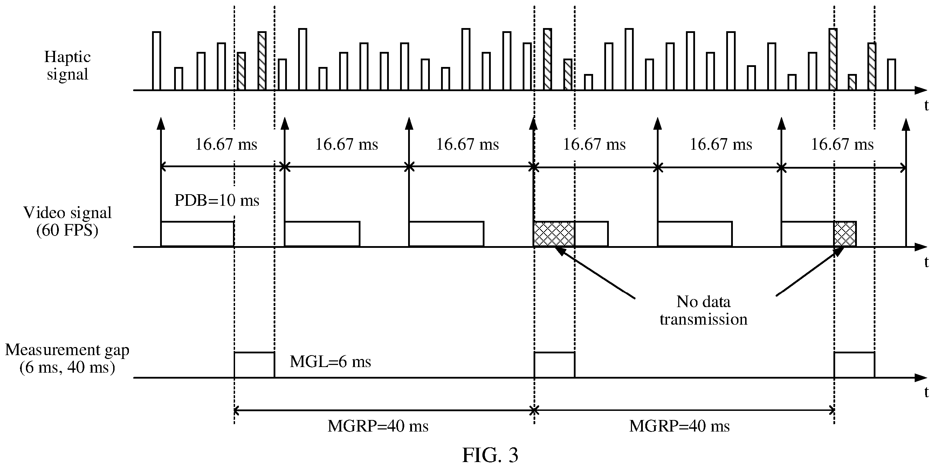

For example, FIG. 3 is a diagram of impact of a measurement gap on an XR video service and a haptic service. Herein, an example in which a configuration of the measurement gap is MGL=6 ms and MGRP=40 ms is used. It can be learned from FIG. 3 that, for both the XR video service and the haptic service, the measurement gap causes definite capacity decreases. In particular, the haptic service has a stricter requirement for reliability and a delay than the XR video service, and a haptic signal arrives aperiodically. Consequently, a capacity of the haptic signal is more severely limited. As shown in FIG. 3, for transmission of an XR video signal with a frame rate of 60 frames per second (frame per second, FPS), a packet transmission delay budget (packet delay budget, PDB) of each video frame is 10 ms, a repetition period is 16.67 ms, two video frames in every six frames are located in a measurement gap, and transmission of the two video frames is affected. With reference to an oblique grid in FIG. 3, no video frame data is sent in this period. For transmission of the haptic signal, because one user may use a plurality of haptic sensors simultaneously, signals generated by each haptic sensor arrive randomly, and a time interval between two signal arrivals may comply with generalized Pareto distribution, a haptic signal frame that is affected and cannot be sent exists in each measurement gap.

Based on this, this application provides a communication method, to adjust a measurement gap to preferentially perform data transmission, so as to reduce a data transmission delay, and improve service performance of a data transmission service that has a high delay requirement or is of high importance, for example, an XR video service and a haptic service.

To better describe embodiments of this application, the following describes, with reference to the accompanying drawings, a method provided in embodiments of this application. Unless otherwise specified below, in the accompanying drawings corresponding to embodiments of this application, steps represented by dashed lines are all optional steps. The methods provided in embodiments of this application may be applied to the network architecture shown in FIG. 1. For example, a UE in embodiments of this application may be the terminal device in FIG. 1, and a network device in embodiments of this application may be the radio access network device in FIG. 1.

### Implementation 1

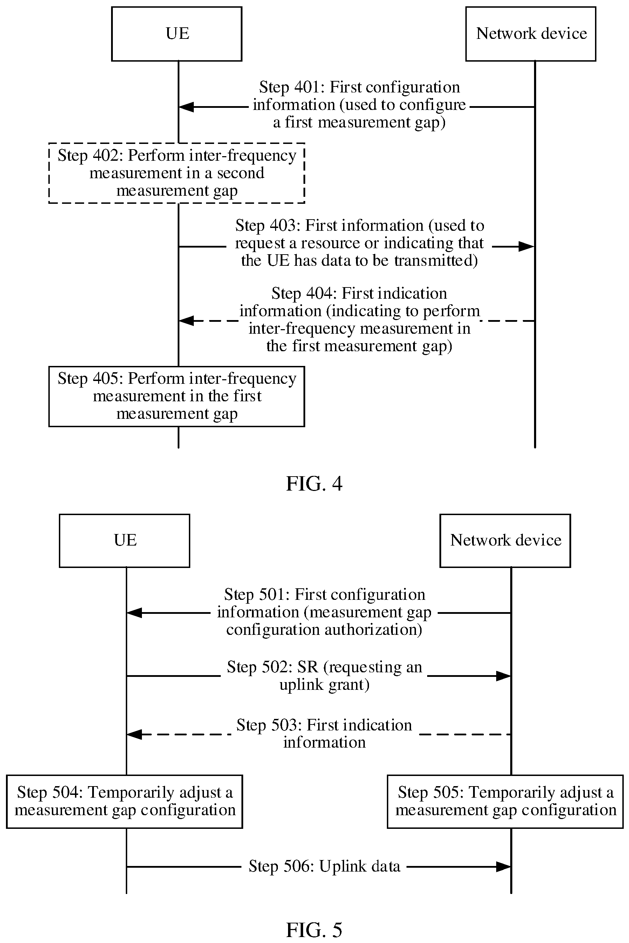

An embodiment of this application provides a communication method. FIG. 4 is a flowchart of the method. The method includes the following steps.

**Step 401: The UE determines first configuration information, where the first configuration information is used to configure a first measurement gap.** For example, the first configuration information may be predefined in a protocol, the first configuration information may be preconfigured by the network device for the UE, or the first configuration information may be from the network device. Correspondingly, in this case, the network device sends the first configuration information to the UE (which is specifically shown in FIG. 4). The first configuration information may be included in radio resource control (radio resource control, RRC) signaling.

In this embodiment of this application, a measurement gap of the UE includes a first measurement gap and a second measurement gap, and both the first measurement gap and the second measurement gap may be used for inter-frequency measurement. Duration (namely, an MGL of the first measurement gap) of the first measurement gap is less than duration (namely, an MGL of the second measurement gap) of the second measurement gap, and/or a period (namely, an MGRP of the first measurement gap) of the first measurement gap is greater than a period (namely, an MGRP of the second measurement gap) of the second measurement gap. There may be one or more first measurement gaps, and there may also be one or more second measurement gaps. This is not specifically limited. The measurement gap in embodiments of this application may be understood as a specific measurement gap, or may be understood as a measurement gap type, for example, the first measurement gap is a measurement gap type, and the second measurement gap is another measurement gap type.

In a possible implementation, the first configuration information may be further used to configure first duration, and the first duration indicates duration for which inter-frequency measurement is performed in the first measurement gap, for example, duration for which inter-frequency measurement is performed in the first measurement gap after execution of inter-frequency measurement in the first measurement gap is triggered. For another example, in some cases, the first measurement gap may be understood as a temporary measurement gap configuration, and the second measurement gap may be a non-temporary measurement gap configuration. After some conditions are met, switching from performing inter-frequency measurement in the second measurement gap to performing inter-frequency measurement in the first measurement gap is triggered. In this case, the first duration may be understood as duration for which inter-frequency measurement is continuously performed in the first measurement gap after the switching, that is, duration of a temporarily adjusted measurement gap configuration.

The first duration may be indicated by using a newly added field. The newly added field may be, for example, "Measurement Gap Temp Period". The field may be, for example, newly added to a GapConfig field of a MeasGapConfig information element in RRC signaling. A name of the newly added field is not limited to "Measurement Gap Temp Period", and another name may also be used. This is not specifically limited herein.

A value of the first duration may be an integer multiple of an optional value of the MGRP, for example, may be one of 20 ms, 40 ms, 80 ms, 120 ms, 160 ms, or 320 ms. Alternatively, a value of the first duration may be one of 10 ms, 30 ms, or 50 ms. A specific value is not limited.

The first measurement gap and the second measurement gap may be configured by using same configuration information. For example, the first configuration information may be used to configure the first measurement gap and the second measurement gap. Alternatively, the first measurement gap and the second measurement gap may be configured by using different configuration information. For example, the first measurement gap is configured by using the first configuration information, and the second measurement gap is configured by using second configuration information. This is specifically used as an example subsequently.

The first measurement gap and the second measurement gap may include but are not limited to the following configuration manners.

**Configuration manner 1:** The duration of the first measurement gap is less than the duration of the second measurement gap. Alternatively, this may be described as that a value of the MGL of the first measurement gap is less than a value of the MGL of the second measurement gap, or may be described as that a value of the MGL indicated by the first configuration information is less than a value of the MGL indicated by the second configuration information.

In an example, the duration of the second measurement gap may be one of 1.5 ms, 3 ms, 3.5 ms, 4 ms, 5.5 ms, and 6 ms, and the duration of the first measurement gap may be one that is of 1.5 ms, 3 ms, 3.5 ms, 4 ms, 5.5 ms, and 6 ms and that is less than the duration of the second measurement gap. For example, when the duration of the second measurement gap is 6 ms, the duration of the first measurement gap may be one of 1.5 ms, 3 ms, 3.5 ms, 4 ms, and 5.5 ms; or when the duration of the second measurement gap is 5.5 ms, the duration of the first measurement gap may be one of 1.5 ms, 3 ms, 3.5 ms, and 4 ms; or when the duration of the second measurement gap is 4 ms, the duration of the first measurement gap may be one of 1.5 ms, 3 ms, and 3.5 ms; or when the duration of the second measurement gap is 3.5 ms, the duration of the first measurement gap may be one of 1.5 ms and 3 ms; or when the duration of the second measurement gap is 3 ms, the duration of the first measurement gap may be 1.5 ms.

In another example, the duration of the second measurement gap may be one of 1.5 ms, 3 ms, 3.5 ms, 4 ms, 5.5 ms, and 6 ms, and the duration of the first measurement gap may be extended to a value less than 1.5 ms, for example, the duration of the first measurement gap may be 1 ms or 0 ms. A specific value is not limited.

In this configuration manner, the first duration may be understood as duration for which inter-frequency measurement is performed in the first measurement gap with shorter duration.

When the configuration manner 1 is used, the duration of the first measurement gap is less than that of the second measurement gap, so that a probability that a service signal is located in the first measurement gap can be reduced, thereby reducing impact of the first measurement gap on a service signal like a haptic signal or an XR video signal, reducing a data transmission delay, and improving service quality.

**Configuration manner 2:** The period of the first measurement gap is greater than the period of the second measurement gap. Alternatively, this may be described as that the MGRP of the first measurement gap is greater than the MGRP of the second measurement gap, or may be described as that a value of the MGRP indicated by the first configuration information is greater than a value of the MGRP indicated by the second configuration information.

In an example, the period of the second measurement gap may be one of 20 ms, 40 ms, 80 ms, and 160 ms, and the period of the first measurement gap may be one that is of 20 ms, 40 ms, 80 ms, and 160 ms and that is greater than the period of the second measurement gap. For example, when the period of the second measurement gap is 20 ms, the period of the first measurement gap may be one of 40 ms, 80 ms, and 160 ms; or when the period of the second measurement gap is 40 ms, the period of the first measurement gap may be one of 80 ms and 160 ms; or when the period of the second measurement gap is 80 ms, the period of the first measurement gap may be 160 ms.

In another example, the period of the second measurement gap may be one of 20 ms, 40 ms, 80 ms, and 160 ms, and the period of the first measurement gap may be extended to a value greater than 160 ms, for example, the period of the first measurement gap may be 320 ms or 480 ms. A specific value is not limited.

In this configuration manner, the first duration may be understood as duration for which inter-frequency measurement is performed in the first measurement gap with a longer period.

When the configuration manner 2 is used, the period of the first measurement gap is greater than that of the second measurement gap, and correspondingly, interval duration between two adjacent first measurement gaps is larger, so that a probability of a conflict between the first measurement gap and the service signal can also be reduced, thereby reducing impact of the first measurement gap on the service signal like the haptic signal or the XR video signal, reducing the data transmission delay, and improving the service quality.

**Configuration manner 3:** The duration of the first measurement gap is less than the duration of the second measurement gap, and the period of the first measurement gap is greater than the period of the second measurement gap.

This configuration manner is a combination of the foregoing configuration manner 1 and configuration manner 2. Therefore, reference may be made to content of the foregoing configuration manner 1 and configuration manner 2. Details are not described herein again.

In this configuration manner, the first duration may be understood as duration for which inter-frequency measurement is performed in the first measurement gap with a longer period and shorter duration.

When the configuration manner 3 is used, the period of the first measurement gap is longer, and duration of a single measurement gap is shorter, so that a probability of a conflict with the service signal can be greatly reduced, and service data transmission can be preferentially ensured, thereby reducing impact of the first measurement gap on the service signal like the haptic signal or the XR video signal, reducing the data transmission delay, and improving the service quality.

**Step 402: The UE performs inter-frequency measurement in the second measurement gap.**

That the UE performs inter-frequency measurement in the second measurement gap may be understood as that the UE performs inter-frequency measurement in each second measurement gap, that is, a receiver of the UE is tuned to a frequency of a target cell for measurement. For the UE, a measurement gap may be understood as an occasion for performing inter-frequency measurement, and the second measurement gap is a measurement occasion under a measurement gap configuration. Therefore, that the UE performs inter-frequency measurement in the second measurement gap may alternatively be understood as that when the measurement occasion, that is, the second measurement gap, exists, the UE performs inter-frequency measurement on the measurement occasion.

Step 402 is an optional step, and may be performed or may not be performed in actual application. In addition, there is no actual sequence between step 401 and step 402. Step 401 and step 402 may be performed simultaneously, or step 401 may be performed first, or step 402 may be performed first. This is not specifically limited.

**Step 403: The UE sends first information to the network device, and correspondingly, the network device receives the first information from the UE.** The first information is used to request a resource or indicates that the UE has to-be-transmitted data.

When the UE needs to send uplink data, the UE may send the first information to the network device, to request the network device to schedule, for the UE, a resource needed for uplink data transmission. For example, the first information may be, for example, an SR. For example, when the UE needs to send uplink data, the UE may send the SR to the network device on a PUCCH to request an uplink grant.

Alternatively, when the UE needs to send uplink data, the UE may send the first information to the network device, to indicate, to the network device, that the UE has the to-be-transmitted data. When learning that the UE has the to-be-transmitted data, the network device schedules, for the UE, a resource needed for uplink data transmission. For example, the first information may be, for example, a BSR, and a data amount of the to-be-transmitted data indicated by the BSR is greater than 0. For example, after receiving DCI from the network device, the UE sends uplink data on a PUSCH resource allocated by the network device. The UE may send the BSR on the PUSCH resource, where the BSR is used to notify the network device of an amount of data that still needs to be sent.

In some cases, for some high-priority transmission services, the first information may be carried on a high-priority logical channel. A high priority may be understood as that a priority of a logical channel is greater than or equal to a first threshold, or the high priority may be understood as that a priority of a logical channel is higher than a priority of at least one other logical channel of a transmission service. The first threshold may be configured by the network device, or the first threshold is predefined or preconfigured, and a value of the first threshold is not specifically limited.

**Step 404: The network device sends first indication information to the UE, and correspondingly, the UE receives the first indication information from the network device.**

The first indication information is sent by the network device to the UE based on the first information. For example, after receiving the first information from the UE, the network device sends the first indication information to the UE. Alternatively, after receiving the first information from the UE, the network device sends the first indication information to the UE when determining that a priority of a logical channel carrying the first information is greater than or equal to the first threshold, or a priority of a logical channel carrying the first information is greater than or equal to a priority of at least one other logical channel of a transmission service.

For example, the priority of the logical channel may be indicated by using a priority field in a LogicalChannelConfig field. A smaller value of the priority field indicates a higher priority. Therefore, a smaller value may be assigned to the priority field to indicate the priority of the logical channel carrying the first information. For example, when a value of a priority field corresponding to the first threshold is 2, a value of the priority field may be 2 or 1, to indicate that the logical channel carrying the first information has a high priority. Correspondingly, after receiving the first information, the network device may also determine, by determining whether the value of the priority field is less than or equal to 2, whether the priority of the logical channel of the first information is greater than the first threshold. For example, when the value of the priority field is less than or equal to 2, it is determined that the priority of the logical channel carrying the first information is greater than or equal to the first threshold, and the network device sends the first indication information to the UE.

The first indication information indicates the UE to perform inter-frequency measurement in the first measurement gap. For example, the first measurement gap configured by using the first configuration information may be a temporary measurement gap configuration, and the second measurement gap may be a non-temporary measurement gap configuration. In this case, the network device determines, based on the received first information, that the UE needs to perform uplink data transmission, and the first measurement gap may use a larger MGRP and/or a smaller MGL. The network device indicates the UE to use the temporary measurement gap configuration, to preferentially ensure uplink data transmission and improve service performance. In addition, the network device indicates the UE to use the temporary measurement gap configuration. This can ensure that both the network device and the UE perform temporary measurement gap configuration, and can avoid an out-of-synchronization case in which the network apparatus fails to receive the first information while the terminal apparatus has performed inter-frequency measurement in the first measurement gap, thereby ensuring that information about the measurement gap configuration used by the UE is synchronized between the network device and the UE.

The first indication information may be included in DCI. The DCI includes a first bit (bit), and the first bit indicates whether the UE performs inter-frequency measurement in the first measurement gap. For example, the first bit may be 1 bit. When a value of the first bit is a first value, it indicates the UE to perform inter-frequency measurement in the first measurement gap. When the value of the first bit is a third value, it indicates the UE not to perform inter-frequency measurement in the first measurement gap. For example, if the first value is 0, the third value is 1; or if the first value is 1, the third value is 0. The first bit may be a newly added bit, or an existing bit in the DCI may be reused.

For example, the DCI may be, for example, a DCI format 0_1 or a DCI format 0_0. For example, 1 bit may be newly added to the DCI format 0_1. A value 0 of the newly added bit indicates the UE not to use the temporary measurement gap configuration, or is understood as indicating the UE not to temporarily adjust a measurement gap configuration. A value 1 of the newly added bit indicates the UE to use the temporary measurement gap configuration, or is understood as indicating the UE to temporarily adjust the measurement gap configuration, for example, adjust from the second measurement gap to the first measurement gap.

Step 404 is an optional step, and may be performed or may not be performed in actual application.

**Step 405: The UE performs inter-frequency measurement in the first measurement gap. For example, the UE performs inter-frequency measurement in the first measurement gap based on sending of the first information. Alternatively, the UE performs inter-frequency measurement in the first measurement gap based on the first indication information received from the network device after sending the first information.**

In an example, once the UE sends the first information, it indicates that the UE needs to transmit uplink data, and the UE performs inter-frequency measurement in the first measurement gap based on a first measurement gap configuration. For example, if a measurement gap configuration currently used by the UE is a measurement gap configuration corresponding to the second measurement gap, after the UE sends the first information, the UE performs inter-frequency measurement in the first measurement gap based on the first measurement gap configuration; or if a measurement gap configuration currently used by the UE is a measurement gap configuration corresponding to the first measurement gap, after the UE sends the first information, the UE continues to perform inter-frequency measurement in the first measurement gap based on the first measurement gap configuration.

In an example, after the UE sends the first information, the network device determines, based on the first information, that the UE needs to perform uplink data transmission, and sends the first indication information to the UE. Under an indication of the first indication information, the UE performs inter-frequency measurement in the first measurement gap based on a first measurement gap configuration. For example, if a measurement gap configuration currently used by the UE is a measurement gap configuration corresponding to the second measurement gap, after the UE receives the first indication information, the UE performs inter-frequency measurement in the first measurement gap based on the first measurement gap configuration; or if a measurement gap configuration currently used by the UE is a measurement gap configuration corresponding to the first measurement gap, after the UE receives the first indication information, the UE continues to perform inter-frequency measurement in the first measurement gap based on the first measurement gap configuration.

The UE may determine a start moment of a next measurement gap based on an originally used measurement gap configuration, and perform inter-frequency measurement in the first measurement gap from the start moment. For example, when the first configuration information is used to configure the first duration, the UE performs inter-frequency measurement in the first measurement gap within the first duration from the start moment. Alternatively, the UE may perform inter-frequency measurement in the first measurement gap from a sending moment of the first information. Alternatively, the UE may perform inter-frequency measurement in the first measurement gap from a receiving moment of the first indication information. Alternatively, an actual moment may be determined in another manner. This is not specifically limited herein.

In addition, the network device schedules, for the UE based on the received first information, a first resource used for uplink data transmission, and the UE may send the uplink data to the network device on the first resource. The UE performs inter-frequency measurement in the first measurement gap. The first measurement gap has shorter duration and/or a longer period than the second measurement gap. Therefore, a probability that to-be-transmitted uplink data is located in the first measurement gap is smaller, and a data transmission delay can be reduced. Alternatively, it may be understood as that because the first measurement gap has shorter duration or a longer period, more time domain resources may be used for uplink data transmission in a time period of same duration. This can ensure uplink data transmission to a greater extent, reduce an uplink data transmission delay, and improve service quality.

For the network device, the network device may learn that the measurement gap configuration currently used by the UE is the first measurement gap configuration, that is, the UE performs inter-frequency measurement in the first measurement gap. In this case, when performing resource scheduling, the network device may schedule a resource outside the first measurement gap for the UE. Because the duration of the first measurement gap has shorter duration or a longer period, the network device may schedule more time domain resources for the UE in a time period of same duration. This can ensure uplink data transmission of the UE to a greater extent, reduce an uplink data transmission delay, and improve service quality.

Based on the foregoing communication method, the following describes the solutions in embodiments of this application by using the following several examples.

**In Example 1 of Implementation 1,** in a dynamic scheduling scenario, when the UE needs to send uplink data, the UE sends an SR to the network device on a PUCCH, to request an uplink grant from the network device. FIG. 5 is another schematic flowchart of a communication method according to an embodiment of this application.

**Step 501:** The network device sends first configuration information to the UE, to perform measurement gap configuration authorization, and correspondingly, the UE receives the first configuration information from the network device.

The network device may include a first measurement gap configuration of a first measurement gap and a second measurement gap configuration of a second measurement gap in the first configuration information, and send the first configuration information to the UE. The UE may obtain both the first measurement gap configuration and the second measurement gap configuration. Alternatively, when a second measurement gap configuration has been configured for the UE, the network device may include a first measurement gap configuration in the first configuration information, and the first measurement gap configuration may be added to the UE based on the first configuration information.

The first measurement gap configuration may include an MGL and an MGRP. The MGL of the first measurement gap is less than an MGL of the second measurement gap, and/or the MGRP of the first measurement gap is greater than an MGRP of the second measurement gap. The first measurement gap configuration further includes first duration. For example, a bearer field of the first duration is "Measurement Gap Temp Period", and the first duration indicates duration for which the first measurement gap configuration is used.

**Step 502:** The UE sends an SR to the network device to request an uplink grant, and correspondingly, the network device receives the SR from the UE.

**Step 503:** The network device sends first indication information to the UE, and correspondingly, the UE receives the first indication information from the network device. The first indication information may be sent by the network device based on the received SR. For example, after receiving the SR, the network device may determine that the UE needs to perform uplink transmission, and the network device sends the first indication information to the UE.

The first indication information indicates the UE to perform inter-frequency measurement in the first measurement gap. For example, the first configuration information may indicate a temporary measurement gap in a measurement gap configuration, and the first indication information indicates the UE to temporarily adjust the measurement gap configuration, that is, adjust an original measurement gap configuration of the UE to the first measurement gap configuration.

The first indication information may be included in DCI. For example, 1 bit may be newly added to a DCI format 0_1. A value 0 of the newly added bit indicates the UE not to temporarily adjust the measurement gap configuration, and a value 1 of the newly added bit indicates the UE to temporarily adjust the measurement gap configuration.

**Step 504:** The UE temporarily adjusts the measurement gap configuration, that is, the UE configures the first measurement gap based on the first configuration information, or the UE uses the first measurement gap configuration. Alternatively, step 504 may be replaced with performing inter-frequency measurement in the first measurement gap.

**Step 505**: The network device temporarily adjusts the measurement gap configuration, that is, the network device adjusts the measurement gap configuration of the UE to the first measurement gap configuration.

For example, if the UE originally performs inter-frequency measurement in the second measurement gap, after the UE receives the first indication information, the UE is adjusted to perform inter-frequency measurement in the first measurement gap, and the first duration indicates duration for which the UE performs inter-frequency measurement in the first measurement gap after being adjusted. If the UE originally performs measurement in the first measurement gap, after the UE receives the first indication information, the UE continues to perform inter-frequency measurement in the first measurement gap. In this case, duration for which the UE performs inter-frequency measurement in the first measurement gap may be that the first duration is added to original duration, or may be updated to the first duration.

**Step 506:** The UE sends uplink data to the network device, and correspondingly, the network device receives the uplink data from the UE.

After receiving the SR, the network device schedules a first resource for the UE, and the UE may send the uplink data to the network device on the first resource. For example, the first resource may be a resource scheduled based on the first measurement gap. For example, the first resource may be located outside the first measurement gap in time domain.

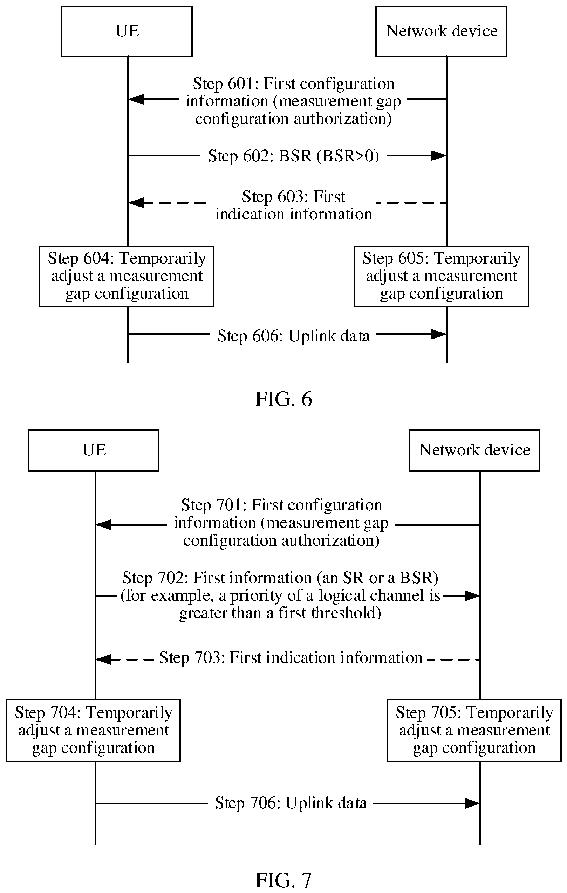

**In Example 2 of Implementation 1,** in a pre-scheduling scenario, when the UE needs to send uplink data, the network device actively allocates, to the UE, a time-frequency resource used to transmit the uplink data. In this way, the UE does not need to send an SR to obtain an uplink grant. When transmitting data on a PUSCH resource, the UE may send a BSR on the PUSCH resource, where the BSR is used to notify the network device of an amount of data that still needs to be sent. FIG. 6 is another schematic flowchart of a communication method according to an embodiment of this application.

**Step 601:** The network device sends first configuration information to the UE, to perform measurement gap configuration authorization, and correspondingly, the UE receives the first configuration information from the network device.

**Step 602:** The UE sends a BSR to the network device, where a data amount indicated by the BSR is greater than 0, and correspondingly, the network device receives the BSR from the UE.

**Step 603:** The network device sends first indication information to the UE, and correspondingly, the UE receives the first indication information from the network device. The first indication information may be sent by the network device based on the received BSR. For example, after receiving the BSR, the network device may determine that the UE needs to perform uplink transmission, and the network device sends the first indication information to the UE.

**Step 604:** The UE temporarily adjusts a measurement gap configuration, that is, the UE configures a first measurement gap based on the first configuration information, or the UE uses a first measurement gap configuration. Alternatively, step 604 may be replaced with performing inter-frequency measurement in the first measurement gap.

**Step 605**: The network device temporarily adjusts a measurement gap configuration, that is, the network device adjusts a measurement gap configuration of the UE to a first measurement gap configuration.

**Step 606:** The UE sends uplink data to the network device, and correspondingly, the network device receives the uplink data from the UE.

After receiving the BSR, the network device schedules a first resource for the UE, and the UE may send the uplink data to the network device on the first resource. For example, the first resource may be a resource scheduled based on the first measurement gap. For example, the first resource may be located outside the first measurement gap in time domain.

It should be noted that, for same steps and beneficial effects in step 601 to step 606, refer to the descriptions in the embodiment shown in FIG. 5. Details are not described herein again.

**In Example 3 of Implementation 1,** for a transmission service having a high delay requirement or high importance, a resource may be requested or to-be-transmitted data may be indicated through a high-priority logical channel. FIG. 7 is another schematic flowchart of a communication method according to an embodiment of this application.

**Step 701:** The network device sends first configuration information to the UE, to perform measurement gap configuration authorization, and correspondingly, the UE receives the first configuration information from the network device.

**Step 702:** The UE sends first information to the network device, for example, a priority of a logical channel carrying the first information is greater than a first threshold, and correspondingly, the network device receives the first information from the UE, and when receiving the first information, the network device may also learn that the priority of the logical channel carrying the first information is greater than the first threshold.

For example, the first information is, for example, an SR; or the first information is, for example, a BSR, and a data amount indicated by the BSR is greater than 0.

**Step 703:** The network device sends first indication information to the UE, and correspondingly, the UE receives the first indication information from the network device. The first indication information may be sent by the network device based on the priority of the logical channel carrying the first information. For example, the network device determines that the priority of the logical channel carrying the first information is greater than the first threshold, and sends the first indication information to the UE.

**Step 704:** The UE temporarily adjusts a measurement gap configuration, that is, the UE configures a first measurement gap based on the first configuration information, or the UE uses a first measurement gap configuration. Alternatively, step 704 may be replaced with performing inter-frequency measurement in the first measurement gap.

**Step 705**: The network device temporarily adjusts a measurement gap configuration, that is, the network device adjusts a measurement gap configuration of the UE to a first measurement gap configuration.

**Step 706:** The UE sends uplink data to the network device, and correspondingly, the network device receives the uplink data from the UE.

After receiving the first information (for example, the SR or the BSR, where the BSR is greater than 0), the network device schedules a first resource for the UE, and the UE may send the uplink data to the network device on the first resource. For example, the first resource may be a resource scheduled based on the first measurement gap. For example, the first resource may be located outside the first measurement gap in time domain.

It should be noted that, for same steps and beneficial effects in step 701 to step 706, refer to the descriptions in the embodiment shown in FIG. 5. Details are not described herein again.

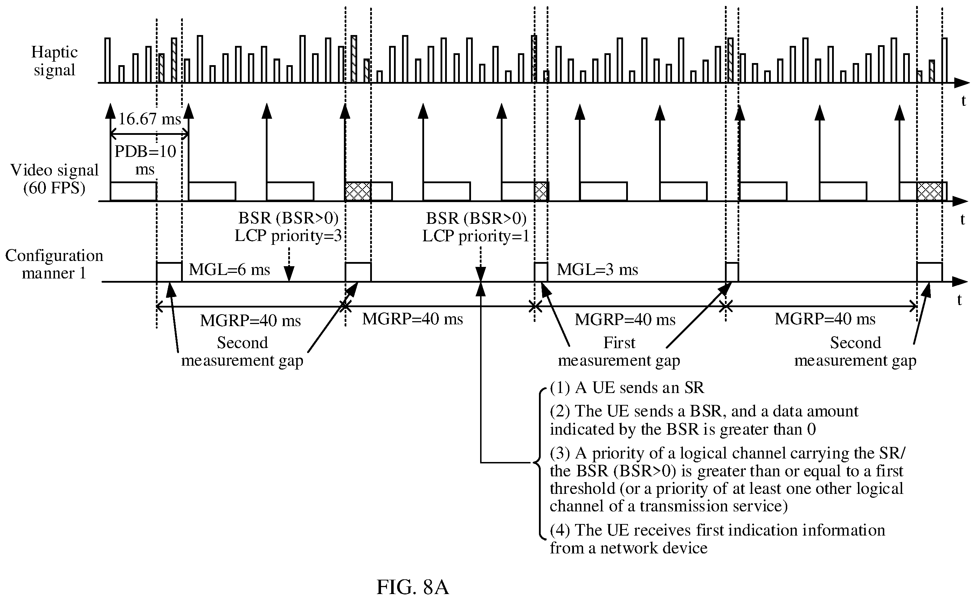

For example, corresponding to the foregoing configuration manner 1 to configuration manner 3, FIG. 8A to FIG. 8C show several examples in which a UE perform uplink transmission.

**Corresponding to the configuration manner 1,** with reference to FIG. 8A, an MGL of the second measurement gap is configured as 6 ms, and an MGRP of the second measurement gap is configured as 40 ms. An MGL of the first measurement gap is configured as 3 ms, an MGRP of the first measurement gap is configured as 40 ms, and the newly added field Measurement Gap Temp Period is configured as 80 ms. In this configuration manner, duration of the measurement gap is reduced, and duration for reduction is 80 ms.

In this case, the UE originally performs inter-frequency measurement in the second measurement gap. When a temporary adjustment condition is met, the UE temporarily adjusts a measurement gap configuration to a configuration of the first measurement gap. With reference to FIG. 8A, the UE performs inter-frequency measurement in the first measurement gap within 80 ms (namely, two measurement gap periods) from a next measurement gap of the second measurement gap. In comparison with the original second measurement gap, a period of the measurement gap remains unchanged, and the duration is reduced from 6 ms to 3 ms, where 80 ms is duration for which the duration is reduced.

The temporary adjustment condition may include: The UE sends an SR to the network device; or the UE sends a BSR to the network device, where a data amount indicated by the BSR is greater than 0; or the UE sends first information to the network device, and a priority of a logical channel carrying the first information is greater than a first threshold, or a priority of a logical channel carrying the first information is greater than or equal to a priority of at least one other logical channel of a transmission service, for example, the first information may be an SR or a BSR (a data amount indicated by the BSR is greater than 0); or the UE receives first indication information from the network device. The first indication information may be sent by the network device based on the received SR or BSR (where the data amount indicated by the BSR is greater than 0) when the priority of the logical channel carrying the first information is greater than or equal to the first threshold, or the priority of the logical channel carrying the first information is greater than or equal to the priority of the at least one other logical channel of the transmission service.

For example, FIG. 8A shows a case in which determining is performed with reference to a priority of a logical channel. The UE originally performs inter-frequency measurement in the second measurement gap. The UE sends a BSR to the network device, and a data amount indicated by the BSR is greater than 0, but a value of a priority field of a logical channel carrying the BSR is 3 and is greater than a value 2 corresponding to the first threshold. In this case, the temporary adjustment condition is not met, and the UE still performs inter-frequency measurement in the second measurement gap. The UE sends a BSR to the network device again, and a value of a priority field of a logical channel carrying the BSR is 1 and is less than the value 2 corresponding to the first threshold. In this case, the temporary adjustment condition is met, and the UE temporarily adjusts the measurement gap configuration, so that the UE performs inter-frequency measurement in the first measurement gap.

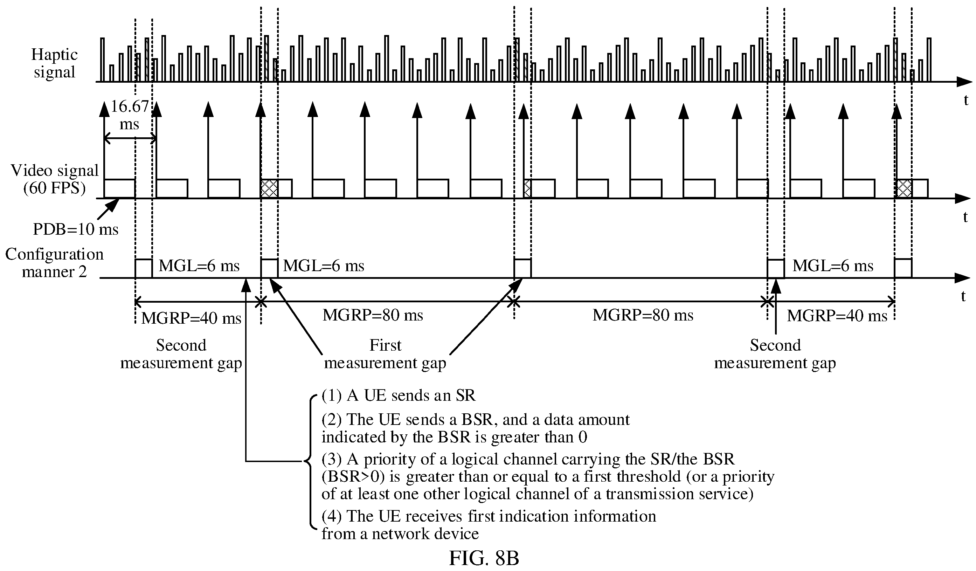

**Corresponding to the configuration manner 2**, with reference to FIG. 8B, an MGL of the second measurement gap is configured as 6 ms, and an MGRP of the second measurement gap is configured as 40 ms. An MGL of the first measurement gap is configured as 6 ms, an MGRP of the first measurement gap is configured as 80 ms, and the newly added field Measurement Gap Temp Period is configured as 160 ms. In this configuration manner, a period of the measurement gap is increased, and duration for increasing is 160 ms.

In this case, the UE originally performs inter-frequency measurement in the second measurement gap. When a temporary adjustment condition is met, the UE temporarily adjusts a measurement gap configuration to a configuration of the first measurement gap. With reference to FIG. 8B, the UE performs inter-frequency measurement in the first measurement gap within 160 ms from a next measurement gap of the second measurement gap, that is, the following two measurement gaps each are the first measurement gap. In comparison with the original second measurement gap, duration of the measurement gap remains unchanged, and the period of the measurement gap is increased from 40 ms to 80 ms, where 160 ms is duration for which the period is increased.

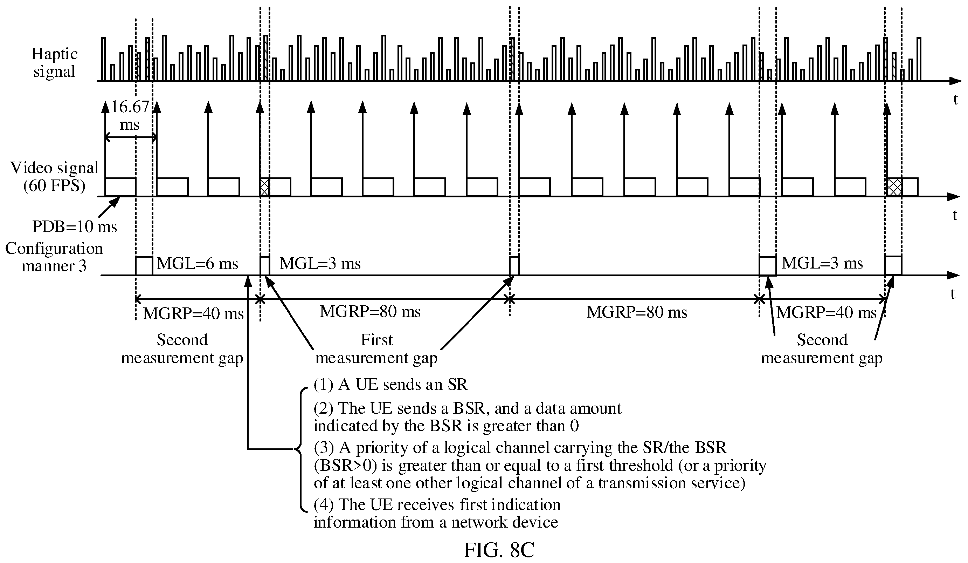

**Corresponding to the configuration manner 3,** with reference to FIG. 8C, an MGL of the second measurement gap is configured as 6 ms, and an MGRP of the second measurement gap is configured as 40 ms. An MGL of the first measurement gap is configured as 3 ms, an MGRP of the first measurement gap is configured as 80 ms, and the newly added field Measurement Gap Temp Period is configured as 160 ms. In this configuration manner, duration of the measurement gap is reduced, a period of the measurement gap is increased, duration for which the duration is reduced and the period is increased is 160 ms.

In this case, the UE originally performs inter-frequency measurement in the second measurement gap. When a temporary adjustment condition is met, the UE temporarily adjusts a measurement gap configuration to a configuration of the first measurement gap. With reference to FIG. 8B, the UE performs inter-frequency measurement in the first measurement gap within 160 ms from a next measurement gap of the second measurement gap, that is, the following two measurement gaps each are the first measurement gap. In comparison with the original second measurement gap, the duration of the measurement gap is reduced from 6 ms to 3 ms, and the period of the measurement gap is increased from 40 ms to 80 ms, where 160 ms is duration for which the period is increased and the duration is reduced.

It can be learned that, in comparison with the signal transmission in FIG. 3, in FIG. 8A to FIG. 8C, in comparison with the original second measurement gap, a probability of a collision between the first measurement gap and the XR video signal and the haptic signal is significantly reduced. For example, for the XR video signal, if duration in which a video frame conflicts with the first measurement gap is reduced, a transmission delay of the XR video signal is lower than that in the second measurement gap, and a quantity of video frames that conflict with the first measurement gap is reduced. Therefore, impact of the measurement gap on transmission of the haptic signal is correspondingly reduced. For the haptic signal, a quantity of haptic signal frames that conflict with the first measurement gap is significantly reduced, and/or a time interval between affected haptic frames is increased correspondingly with a period of the measurement gap. Therefore, impact of the measurement gap on transmission of the haptic signal is correspondingly reduced. Therefore, in the technical solutions in embodiments of this application, data transmission can be preferentially performed, and impact of the measurement gap on data transmission is reduced, thereby reducing a data transmission delay and improving service quality.

It should be noted that, with reference to FIG. 8A to FIG. 8C, after the second duration ends, the UE may adjust the measurement gap configuration again to a configuration of the second measurement gap, so as to resume performing inter-frequency measurement in the second measurement gap.

### Implementation 2

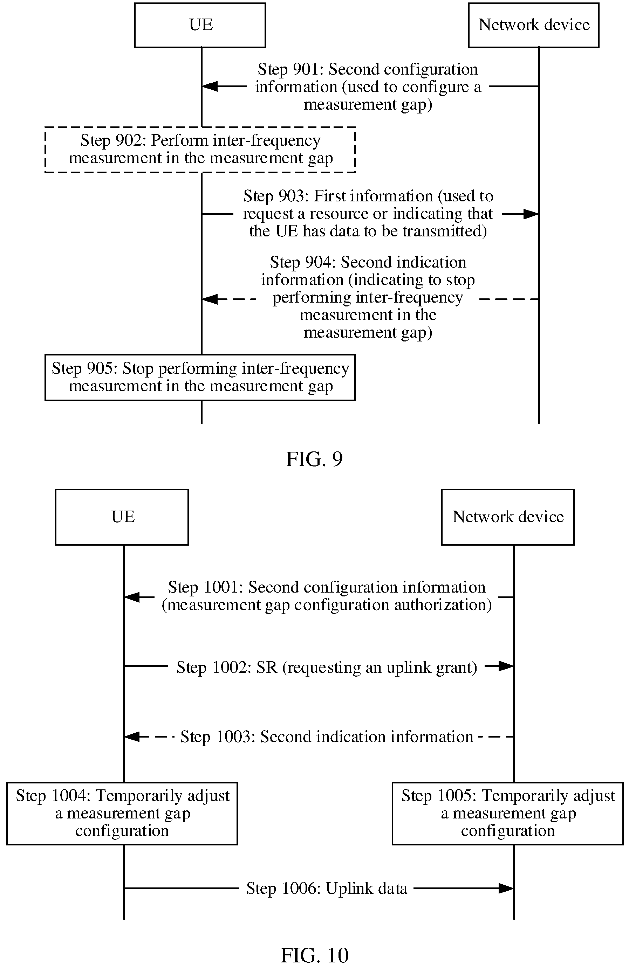

An embodiment of this application further provides a communication method. FIG. 9 is a flowchart of the method. The method includes the following steps.

**Step 901: A UE determines second configuration information**. The second configuration information is used to configure a measurement gap. For example, the second configuration information may be predefined in a protocol, the second configuration information may be preconfigured by a network device for the UE, or the second configuration information may be from the network device. Correspondingly, in this case, the network device sends the second configuration information to the UE. The second configuration information may be included in RRC.

In this embodiment of this application, the second configuration information may include a configuration parameter necessary for configuring a measurement gap of the UE. For example, the configuration parameter may include at least one of an MGL, an MGRP, and a gap offset. The MGL may be one of 1.5 ms, 3 ms, 3.5 ms, 4 ms, 5.5 ms, and 6 ms, and the MGRP may be one of 20 ms, 40 ms, 80 ms, and 160 ms.

In a possible implementation, the second configuration information may be further used to configure second duration, and the second duration indicates duration for which the UE stops performing inter-frequency measurement in the measurement gap. For example, the second duration may be indicated by using a newly added field. The newly added field may be, for example, "Measurement Gap Termination Period". The field may be, for example, newly added to a GapConfig field of a MeasGapConfig information element in RRC signaling. A name of the newly added field is not limited to the foregoing name, and another name may also be used. This is not specifically limited herein.

A value of the second duration may be an integer multiple of an optional value of the MGRP, for example, may be one of 20 ms, 40 ms, 80 ms, 120 ms, 160 ms, or 320 ms, or may be one of 10 ms, 30 ms, or 50 ms. A specific value is not limited.

**Step 902: The UE performs inter-frequency measurement in the measurement gap.**

**Step 903: The UE sends first information to the network device, and correspondingly, the network device receives the first information from the UE.** The first information is used to request a resource or indicates that the UE has to-be-transmitted data.

The first information may be, for example, an SR, or the first information may be, for example, a BSR, and a data amount of the to-be-transmitted data indicated by the BSR is greater than 0.

In some cases, for some high-priority transmission services, the first information may be carried on a high-priority logical channel. A high priority may be understood as that a priority is greater than or equal to a first threshold, or the high priority may be understood as that a priority of a logical channel is higher than a priority of at least one other logical channel of a transmission service. The first threshold may be configured by the network device, or the first threshold is predefined or preconfigured.

**Step 904: The network device sends second indication information to the UE, and correspondingly, the UE receives the second indication information from the network device.** The second indication information indicates the UE to stop performing inter-frequency measurement in the measurement gap, or may be understood as indicating the UE to suspend inter-frequency measurement or indicating the UE not to perform inter-frequency measurement within a period of time.

The second indication information is sent by the network device to the UE based on the first information. For example, after receiving the first information from the UE, the network device sends the second indication information to the UE. Alternatively, after receiving the first information from the UE, the network device sends the second indication information to the UE when determining that a priority of a logical channel carrying the first information is greater than or equal to the first threshold, or a priority of a logical channel carrying the first information is greater than or equal to a priority of at least one other logical channel of a transmission service.

For example, the priority of the logical channel may be indicated by using a priority field in a LogicalChannelConfig field. A smaller value of the priority field indicates a higher priority. Therefore, a smaller value may be assigned to the priority field to indicate the priority of the logical channel carrying the first information. For example, when a value of a priority field corresponding to the first threshold is 2, a value of the priority field may be 2 or 1, to indicate that the logical channel carrying the first information has a high priority. Correspondingly, after receiving the first information, the network device may also determine, by determining whether the value of the priority field is less than or equal to 2, whether the priority of the logical channel of the first information is greater than the first threshold. For example, when the value of the priority field is less than or equal to 2, it is determined that the priority of the logical channel carrying the first information is greater than or equal to the first threshold, and the network device sends the second indication information to the UE.

The second indication information indicates the UE to stop performing inter-frequency measurement in the measurement gap, so that the UE can preferentially ensure uplink data transmission, thereby reducing a data transmission delay, and improving service quality. In addition, the network device indicates the UE by using the second indication information. This can ensure that both the network device and the UE temporarily adjust a measurement gap configuration, and can avoid an out-of-synchronization case in which the network apparatus fails to receive the first information while the terminal apparatus has stopped performing inter-frequency measurement, thereby ensuring that information about the measurement gap configuration is synchronized between the network device and the UE.

The second indication information may be included in DCI. The DCI includes a second bit (bit), and the second bit indicates whether the UE stops performing inter-frequency measurement in the measurement gap. Alternatively, stopping performing inter-frequency measurement in the measurement gap may be understood as temporarily adjusting a measurement gap configuration or canceling the measurement gap configuration. In this case, the second bit may alternatively indicate whether the UE temporarily adjusts the measurement gap configuration. For example, the second bit may be 1 bit. When a value of the second bit is a second value, it indicates the UE to stop performing inter-frequency measurement in the measurement gap. When the value of the second bit is a fourth value, it indicates the UE not to stop performing inter-frequency measurement in the measurement gap. For example, if the second value is 0, the fourth value is 1; or if the second value is 1, the fourth value is 0. The second bit may be a newly added bit, or an existing bit in the DCI may be reused.

For example, the DCI may be, for example, a DCI format 0_1 or a DCI format 0_0. For example, 1 bit may be newly added to the DCI format 0_1. A value 0 of the newly added bit indicates the UE not to stop performing inter-frequency measurement in the measurement gap, or is understood as indicating the UE not to temporarily adjust the measurement gap configuration. A value 1 of the newly added bit indicates the UE to stop performing inter-frequency measurement in the measurement gap, or is understood as indicating the UE to temporarily adjust the measurement gap configuration, for example, to stop performing inter-frequency measurement in the measurement gap.

Step 904 is an optional step, and may be performed or may not be performed in actual application. Stopping performing inter-frequency measurement in the measurement gap may alternatively be understood as "prohibiting performing inter-frequency measurement", "canceling the measurement gap", or "canceling performing inter-frequency measurement".

**Step 905: The UE stops performing inter-frequency measurement in the measurement gap. For example, the UE stops, based on sending of the first information, performing inter-frequency measurement in the measurement gap. Alternatively, the UE stops, based on the first indication information received from the network device after sending the first information, performing inter-frequency measurement in the measurement gap.**

In an example, once the UE sends the first information, it indicates that the UE needs to transmit uplink data, and the UE temporarily adjusts the measurement gap configuration and stops performing inter-frequency measurement in the measurement gap. For example, after the UE sends the first information, if the UE encounters an occasion of a measurement gap, the UE does not perform inter-frequency measurement in the measurement gap, and continues to perform uplink data transmission; or after the UE sends the first information, if the UE encounters an occasion of a measurement gap within the second duration, the UE does not perform inter-frequency measurement in the measurement gap, and continues to perform uplink data transmission.

In an example, after the UE sends the first information, the network device determines, based on the first information, that the UE needs to perform uplink data transmission, and sends the second indication information to the UE. Under an indication of the second indication information, the UE temporarily adjusts the measurement gap configuration and stops performing inter-frequency measurement in the measurement gap.

The UE may determine a start moment of a next measurement gap based on the measurement gap configuration, and the UE stops performing inter-frequency measurement in the measurement gap from the start moment. For example, when the second configuration information is used to configure the second duration, the UE stops performing inter-frequency measurement in the measurement gap within the second duration from the start moment. Alternatively, the UE may stop performing inter-frequency measurement in the measurement gap from a sending moment of the first information. Alternatively, the UE may stop performing inter-frequency measurement in the measurement gap from a receiving moment of the second indication information. A start moment at which inter-frequency measurement is stopped in the measurement gap is not specifically limited.

In addition, the network device schedules, for the UE based on the received first information, a first resource used for uplink data transmission, and the UE may send the uplink data to the network device on the first resource. If the UE stops performing inter-frequency measurement in the measurement gap, the measurement gap does not conflict with the to-be-transmitted uplink data, and the uplink data may be preferentially sent, thereby reducing a data transmission delay. Alternatively, it may be understood as that a time domain resource in the measurement gap may be used for uplink data transmission. This can ensure uplink data transmission to a greater extent, reduce an uplink data transmission delay, and improve service quality.

For the network device, if the network device determines that the UE has stopped performing inter-frequency measurement, when performing resource scheduling, the network device may schedule a resource in the measurement gap for the UE, so that more time domain resources can be scheduled for the UE, thereby ensuring uplink data transmission of the UE to a greater extent, reducing an uplink data transmission delay, and improving service quality.

Based on the foregoing communication method, the following describes the solutions in embodiments of this application by using the following several examples.

**In Example 1 of Implementation 2,** in a dynamic scheduling scenario, when the UE needs to send uplink data, the UE sends an SR to the network device on a PUCCH, to request an uplink grant from the network device. FIG. 10 is another schematic flowchart of a communication method according to an embodiment of this application.

**Step 1001:** The network device sends second configuration information to the UE, to perform measurement gap configuration authorization, and correspondingly, the UE receives the second configuration information from the network device.

The second configuration information is used to configure a measurement gap, and the measurement gap configured by using the second configuration information may be configured as that the UE may temporarily stop performing inter-frequency measurement in the measurement gap. The second configuration information is further used to configure second duration, and the second duration indicates duration for which the UE stops performing inter-frequency measurement in the measurement gap.

**Step 1002:** The UE sends an SR to the network device to request an uplink grant, and correspondingly, the network device receives the SR from the UE.

**Step 1003:** The network device sends second indication information to the UE, and correspondingly, the UE receives the second indication information from the network device. The second indication information may be sent by the network device based on the received SR. For example, after receiving the SR, the network device may determine that the UE needs to perform uplink transmission, and the network device sends the second indication information to the UE.

**Step 1004:** The UE temporarily adjusts a measurement gap configuration. Alternatively, step 1004 may be replaced with that the UE stops performing inter-frequency measurement in the measurement gap.

**Step 1005:** The network device temporarily adjusts a measurement gap configuration, that is, the network device determines that the UE stops performing inter-frequency measurement in the measurement gap.

For example, after the UE sends the SR, the UE stops performing inter-frequency measurement in the measurement gap within the second duration. Correspondingly, after receiving the SR, the network device also determines that the UE stops performing inter-frequency measurement in the measurement gap within the second duration. Alternatively, after sending the second indication information, the network device determines that the UE stops performing inter-frequency measurement in the measurement gap within the second duration. Correspondingly, the UE stops, based on the received second indication information, performing inter-frequency measurement in the measurement gap within the second duration.

**Step 1006:** The UE sends uplink data to the network device, and correspondingly, the network device receives the uplink data from the UE.

After receiving the SR, the network device schedules a first resource for the UE, and the UE may send the uplink data to the network device on the first resource. For example, the first resource may include, in time domain, a time domain resource corresponding to the measurement gap.

In the foregoing manner, the UE may perform uplink data transmission on the time domain resource of the measurement gap, to preferentially ensure service data transmission, reduce impact of the measurement gap on data transmission, and improve service quality.

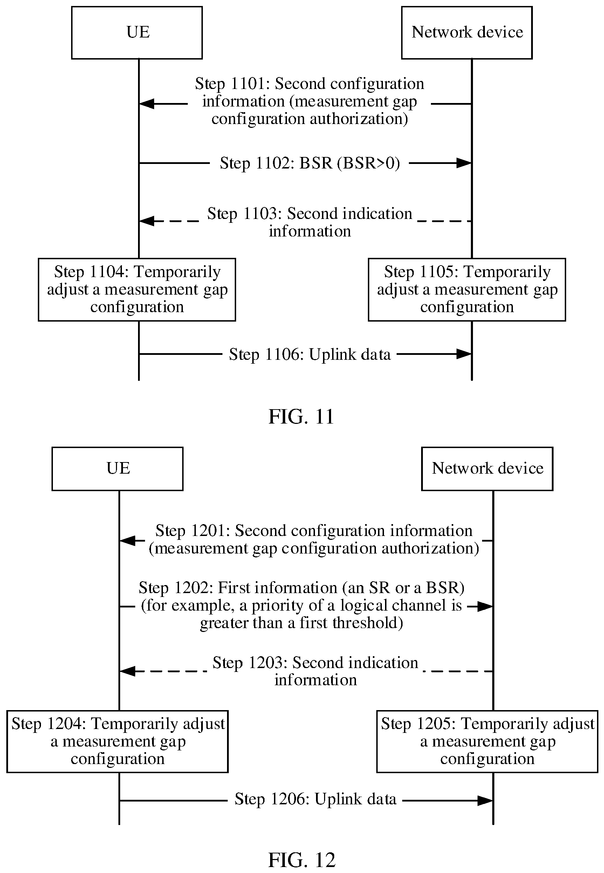

**In Example 2 of Implementation 2,** in a pre-scheduling scenario, when the UE needs to send uplink data, the network device actively allocates, to the UE, a time-frequency resource used to transmit the uplink data. In this way, the UE does not need to send an SR to obtain an uplink grant. When transmitting data on a PUSCH resource, the UE may send a BSR on the PUSCH resource, where the BSR is used to notify the network device of an amount of data that still needs to be sent. FIG. 11 is another schematic flowchart of a communication method according to an embodiment of this application.

**Step 1101:** The network device sends second configuration information to the UE, to perform measurement gap configuration authorization, and correspondingly, the UE receives the second configuration information from the network device.

**Step 1102:** The UE sends a BSR to the network device, where a data amount indicated by the BSR is greater than 0, and correspondingly, the network device receives the BSR from the UE.

**Step 1103:** The network device sends second indication information to the UE, and correspondingly, the UE receives the second indication information from the network device. The second indication information may be sent by the network device based on the received BSR. For example, after receiving the BSR, the network device may determine that the UE needs to perform uplink transmission, and the network device sends the second indication information to the UE.

**Step 1104:** The UE temporarily adjusts a measurement gap configuration. Alternatively, step 1104 may be replaced with that the UE stops performing inter-frequency measurement in a measurement gap.

**Step 1105:** The network device temporarily adjusts a measurement gap configuration, that is, the network device determines that the UE stops performing inter-frequency measurement in the measurement gap.

**Step 1106:** The UE sends uplink data to the network device, and correspondingly, the network device receives the uplink data from the UE.

It should be noted that, for same steps and beneficial effects in step 1101 to step 1106, refer to the descriptions in the embodiment shown in FIG. 10. Details are not described herein again.

**In Example 3 of Implementation 2,** for a transmission service having a high delay requirement or high importance, a resource may be requested or to-be-transmitted data may be indicated through a high-priority logical channel. FIG. 12 is another schematic flowchart of a communication method according to an embodiment of this application.

**Step 1201:** The network device sends second configuration information to the UE, to perform measurement gap configuration authorization, and correspondingly, the UE receives the second configuration information from the network device.

**Step 1202:** The UE sends first information to the network device, for example, a priority of a logical channel carrying the first information is greater than a first threshold, and correspondingly, the network device receives the first information from the UE, and when receiving the first information, the network device may also learn that the priority of the logical channel carrying the first information is greater than the first threshold.

For example, the first information is, for example, an SR; or the first information is, for example, a BSR, and a data amount indicated by the BSR is greater than 0.

**Step 1203:** The network device sends second indication information to the UE, and correspondingly, the UE receives the second indication information from the network device. The second indication information may be sent by the network device based on the priority of the logical channel carrying the first information. For example, the network device determines that the priority of the logical channel carrying the first information is greater than the first threshold, and sends the second indication information to the UE.

**Step 1204:** The UE temporarily adjusts a measurement gap configuration. Alternatively, step 1204 may be replaced with that the UE stops performing inter-frequency measurement in a measurement gap.

**Step 1205:** The network device temporarily adjusts a measurement gap configuration, that is, the network device determines that the UE stops performing inter-frequency measurement in the measurement gap.

**Step 1206:** The UE sends uplink data to the network device, and correspondingly, the network device receives the uplink data from the UE.

It should be noted that, for same steps in step 1201 to step 1206, refer to the descriptions in the embodiment shown in FIG. 10. Details are not described herein again.

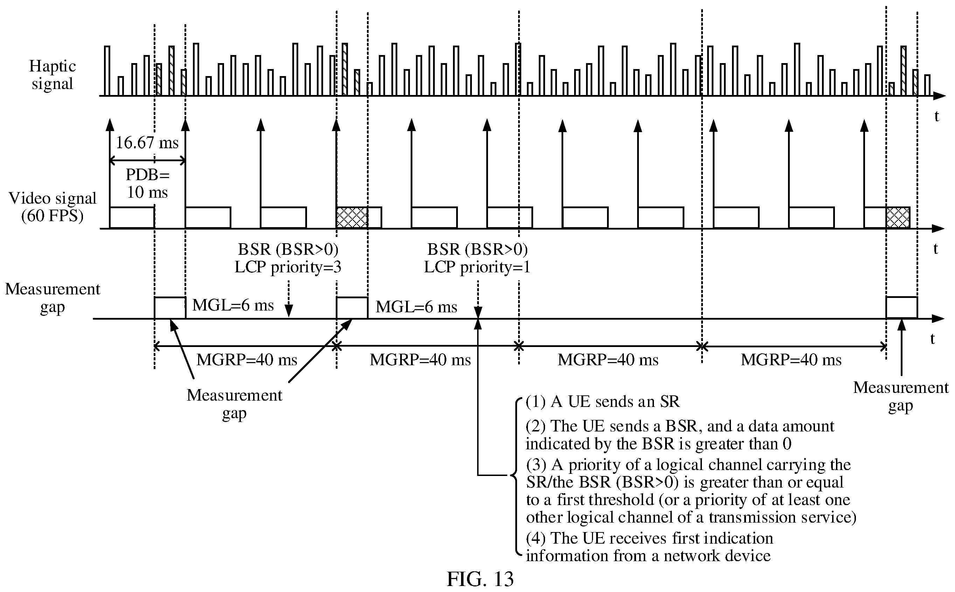

For example, **corresponding to Implementation 2,** FIG. 13 shows an example in which a UE performs uplink transmission. With reference to FIG. 13, an MGL of a measurement gap configured by using the second configuration information is configured as 6 ms, an MGRP of the measurement gap is configured as 40 ms, and a newly added field Measurement Gap Termination Period is configured as 80 ms.

In this case, the UE originally needs to perform inter-frequency measurement in the measurement gap. When a temporary adjustment condition is met, the UE temporarily adjusts a measurement gap configuration, that is, temporarily stops performing inter-frequency measurement in the measurement gap. With reference to FIG. 13, the UE does not perform inter-frequency measurement within 80 ms from a next measurement gap of the measurement gap, or the measurement gap in the following two measurement gap periods is ignored, and the UE does not perform inter-frequency measurement in the measurement gap.

The temporary adjustment condition may include: The UE sends an SR to the network device; or the UE sends a BSR to the network device, where a data amount indicated by the BSR is greater than 0; or the UE sends first information to the network device, and a priority of a logical channel carrying the first information is greater than a first threshold, or a priority of a logical channel carrying the first information is greater than or equal to a priority of at least one other logical channel of a transmission service, for example, the first information may be an SR or a BSR (a data amount indicated by the BSR is greater than 0); or the UE receives second indication information from the network device. The second indication information may be sent by the network device based on the received SR or BSR (where the data amount indicated by the BSR is greater than 0) when the priority of the logical channel carrying the first information is greater than or equal to the first threshold or the priority of the logical channel carrying the first information is greater than or equal to the priority of the at least one other logical channel of the transmission service.

For example, FIG. 13 shows a case in which determining is performed with reference to a priority of a logical channel. The UE originally performs inter-frequency measurement in the measurement gap. The UE sends a BSR to the network device, and a data amount indicated by the BSR is greater than 0, but a value of a priority field of a logical channel carrying the BSR is 3 and is greater than a value 2 corresponding to the first threshold. In this case, the temporary adjustment condition is not met, and the UE still performs inter-frequency measurement in the measurement gap. The UE sends a BSR to the network device again, and a value of a priority field of a logical channel carrying the BSR is 1 and is less than the value 2 corresponding to the first threshold. In this case, the temporary adjustment condition is met, and the UE temporarily adjusts a measurement gap configuration, so that the UE stops performing inter-frequency measurement in the measurement gap.

It can be learned that, in comparison with the signal transmission in FIG. 3, in FIG. 13, the UE stops performing inter-frequency measurement in the measurement gap, and may still send the XR video signal and the haptic signal in the measurement gap. Therefore, impact of the measurement gap on transmission of the XR video signal and the haptic signal is correspondingly reduced. Therefore, in the technical solutions in embodiments of this application, data transmission can be preferentially performed, and impact of the measurement gap on data transmission can be reduced, thereby improving service performance.

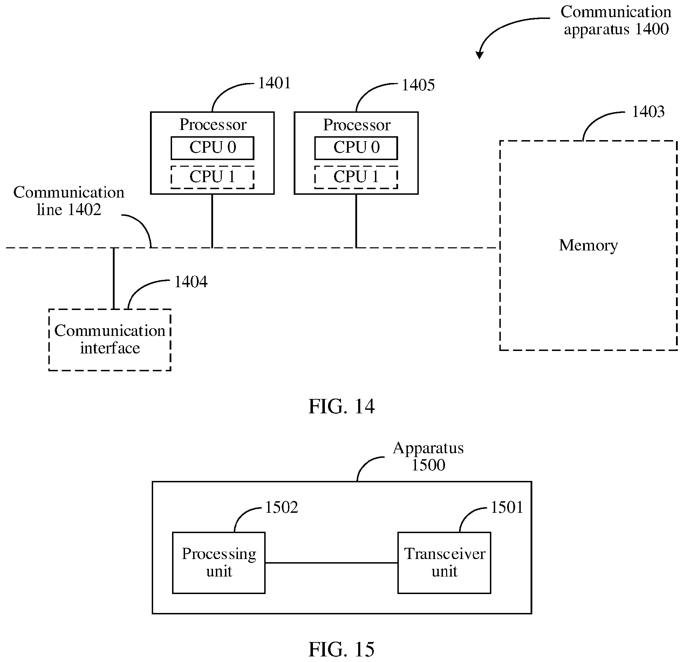

FIG. 14 is a diagram of a structure of a communication apparatus according to an embodiment of this application. The communication apparatus 1400 may be the UE in the embodiment shown in any one of FIG. 4 to FIG. 7 or FIG. 9 to FIG. 12 or a circuit system of the UE, and is configured to implement the method corresponding to the UE in the foregoing method embodiments. Alternatively, the communication apparatus 1400 may be the network device in the embodiment shown in any one of FIG. 4 to FIG. 7 or FIG. 9 to FIG. 12 or a circuit system of the network device, and is configured to implement the method corresponding to the network device in the foregoing method embodiment. For example, the circuit system is a chip system.

The communication apparatus 1400 includes at least one processor 1401. The processor 1401 may be configured for internal processing of the apparatus, to implement a specific control processing function. Optionally, the processor 1401 includes instructions. Optionally, the processor 1401 may store data. Optionally, different processors may be independent components, may be located at different physical positions, or may be located on different integrated circuits. Optionally, different processors may be integrated into one or more processors, for example, integrated into one or more integrated circuits.

Optionally, the communication apparatus 1400 includes one or more memories 1403, configured to store instructions. Optionally, the memory 1403 may further store data. The processor and the memory may be separately disposed, or may be integrated together.

Optionally, the communication apparatus 1400 includes a communication line 1402 and at least one communication interface 1404. Because the memory 1403, the communication line 1402, and the communication interface 1404 are all optional, the memory 1403, the communication line 1402, and the communication interface 1404 are all indicated by dashed lines in FIG. 14.

Optionally, the communication apparatus 1400 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1400 via the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1401 may include a general-purpose central processing unit (central processing unit, CPU), a microprocessor, an application specific integrated circuit (application specific integrated circuit, ASIC), or one or more integrated circuits configured to control program execution of solutions of this application.

The communication line 1402 may include a path for information transmission between the foregoing components.

The communication interface 1404 is any apparatus like a transceiver, and is configured to communicate with another device or a communication network like an Ethernet, a radio access network (radio access network, RAN), a wireless local area network (wireless local area network, WLAN), or a wired access network.

The memory 1403 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer, but is not limited thereto. The memory 1403 may exist independently, and is connected to the processor 1401 through the communication line 1402. Alternatively, the memory 1403 may be integrated with the processor 1401.

The memory 1403 is configured to store computer-executable instructions for executing the solutions of this application, and the processor 1401 controls execution. The processor 1401 is configured to execute the computer-executable instructions stored in the memory 1403, to implement the steps performed by the UE or the network device in the embodiment shown in any one of FIG. 4 to FIG. 7 or FIG. 9 to FIG. 12.

Optionally, the computer-executable instructions in this embodiment of this application may also be referred to as application program code. This is not specifically limited in embodiments of this application.

During specific implementation, in an embodiment, the processor 1401 may include one or more CPUs, for example, a CPU 0 and a CPU 1 in FIG. 14.

During specific implementation, in an embodiment, the communication apparatus 1400 may include a plurality of processors such as the processor 1401 and a processor 1405 in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 14 is a chip, for example, a chip of the UE or a chip of the network device, the chip includes the processor 1401 (which may further include the processor 1405), the communication line 1402, and the communication interface 1404. Optionally, the chip may include the memory 1403. Specifically, the communication interface 1404 may be an input interface, a pin, a circuit, or the like. The memory 1403 may be a register, a cache, or the like. The processor 1401 and the processor 1405 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when the functional modules are obtained through division based on corresponding functions, FIG. 15 is a diagram of an apparatus. The apparatus 1500 may be the UE or the network device in the foregoing method embodiments, or a chip in the UE or a chip in the network device. The apparatus 1500 includes a processing unit 1502 and a transceiver unit 1501.

It should be understood that the apparatus 1500 may be configured to implement the steps performed by the UE or the network device in the communication method in embodiments of this application. For related features, refer to the embodiment shown in any one of FIG. 4 to FIG. 7 or FIG. 9 to FIG. 12. Details are not described herein again.

Optionally, functions/implementation processes of the transceiver unit 1501 and the processing unit 1502 in FIG. 15 may be implemented by the processor 1401 in FIG. 14 by invoking the computer-executable instructions stored in the memory 1403. Alternatively, a function/an implementation process of the processing unit 1502 in FIG. 15 may be implemented by the processor 1401 in FIG. 14 by invoking the computer-executable instructions stored in the memory 1403; and a function/an implementation process of the transceiver unit 1501 in FIG. 15 may be implemented by the communication interface 1404 in FIG. 14.

Optionally, when the apparatus 1500 is a chip or a circuit, the function/implementation process of the transceiver unit 1501 may alternatively be implemented through a pin, a circuit, or the like. Optionally, the transceiver unit 1501 may include a sending unit and/or a receiving unit. The sending unit is configured to implement a sending function, and the receiving unit is configured to implement a receiving function. Alternatively, the transceiver unit 1501 may be an entire module that can implement a sending function and/or a receiving function. Optionally, the transceiver unit 1501 may be implemented by using a transceiver.

An embodiment of this application further provides a communication system. The communication system may include one or more of the following: a UE or a network device. For the UE or the network device, refer to the descriptions in the foregoing method embodiments. Details are not described again.

This application further provides a computer-readable storage medium. The computer-readable storage medium stores a computer program or instructions. When the computer program or the instructions are run, the method performed by the UE or the network device in the foregoing method embodiment is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the UE or the network device in any one of the foregoing method embodiments.

An embodiment of this application further provides a processing apparatus, including a processor and an interface. The processor is configured to perform the method performed by the UE or the network device in any one of the foregoing method embodiments.

An embodiment of this application provides a chip system. The chip system includes a processor, configured to implement functions (for example, perform corresponding methods or steps) of the UE or the network device in the foregoing methods. The chip system may include a chip, or may include the chip and another discrete component.

Optionally, the chip system further includes a memory. The memory is configured to store program instructions, so that the processor reads and executes the program instructions to implement a corresponding method.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the UE and/or the network device may perform a part or all of the steps in embodiments of this application. The steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, applied to a terminal apparatus, wherein the method comprises:
determining first configuration information, wherein the first configuration information is used to configure a first measurement gap, and the first measurement gap and a second measurement gap are used for inter-frequency measurement; and duration of the first measurement gap is less than duration of the second measurement gap, and/or a period of the first measurement gap is greater than a period of the second measurement gap;
sending first information to a network apparatus, wherein the first information is used to request a resource or indicates that the terminal apparatus has data to be transmitted; and
performing inter-frequency measurement in the first measurement gap based on sending of the first information.

2. The method according to claim 1, wherein before sending the first information to the network apparatus, the method further comprises:
performing inter-frequency measurement in the second measurement gap.

3. The method according to claim 1 or 2, wherein the performing inter-frequency measurement in the first measurement gap based on sending of the first information comprises:
receiving first indication information from the network apparatus, wherein the first indication information is sent by the network apparatus based on the first information, and the first indication information indicates the terminal apparatus to perform inter-frequency measurement in the first measurement gap; and
performing inter-frequency measurement in the first measurement gap based on the first indication information.

4. A communication method, applied to a network apparatus, wherein the method comprises:
sending first configuration information to a terminal apparatus, wherein the first configuration information is used to configure a first measurement gap, and the first measurement gap and a second measurement gap are used for inter-frequency measurement; and
duration of the first measurement gap is less than duration of the second measurement gap, and/or a period of the first measurement gap is greater than a period of the second measurement gap.

5. The method according to claim 4, wherein the method further comprises:
receiving first information from the terminal apparatus, wherein the first information is used to request a resource or indicates that the terminal apparatus has data to be transmitted; and
sending first indication information to the terminal apparatus based on the first information, wherein the first indication information indicates the terminal apparatus to perform inter-frequency measurement in the first measurement gap.

6. The method according to claim 3 or 5, wherein the first indication information is comprised in downlink control information DCI, the DCI comprises a first bit, and when the first bit is a first value, it indicates the terminal apparatus to perform inter-frequency measurement in the first measurement gap.

7. The method according to any one of claims 1 to 6, wherein the first configuration information is further used to configure first duration, and the first duration indicates duration for which the terminal apparatus performs inter-frequency measurement in the first measurement gap.

8. The method according to any one of claims 1 to 7, wherein the first information is a scheduling request SR; or the first information is a buffer status report BSR, and a data amount indicated by the BSR is greater than 0.

9. The method according to any one of claims 1 to 8, wherein a priority of a logical channel carrying the first information is greater than or equal to a first threshold; or a priority of a logical channel carrying the first information is greater than or equal to a priority of at least one other logical channel of a transmission service.

10. A communication method, applied to a terminal apparatus, wherein the method comprises:
determining second configuration information, wherein the second configuration information is used to configure a measurement gap;
performing inter-frequency measurement in the measurement gap;
sending first information to a network apparatus, wherein the first information is used to request a resource or indicates that the terminal apparatus has data to be transmitted; and
stopping, based on sending of the first information, performing inter-frequency measurement in the measurement gap.

11. The method according to claim 10, wherein stopping, based on sending of the first information, performing inter-frequency measurement in the measurement gap comprises:
receiving second indication information from the network apparatus, wherein the second indication information is sent by the network apparatus based on the first information, and the second indication information indicates the terminal apparatus to stop performing inter-frequency measurement in the measurement gap; and
stopping, based on the second indication information, performing inter-frequency measurement in the measurement gap.

12. The method according to claim 10 or 11, wherein the second configuration information is further used to configure second duration, and the second duration indicates duration for which inter-frequency measurement is stopped in the measurement gap.

13. A communication method, applied to a network apparatus, wherein the method comprises:
sending second configuration information to a terminal apparatus, wherein the second configuration information is used to configure a measurement gap, and the measurement gap is used for inter-frequency measurement; and
the second configuration information is further used to configure second duration, and the second duration indicates duration for which the terminal apparatus stops performing inter-frequency measurement in the measurement gap.

14. The method according to claim 13, wherein the method further comprises:
receiving first information from the terminal apparatus, wherein the first information is used to request a resource or indicates that the terminal apparatus has data to be transmitted; and
sending second indication information to the terminal apparatus, wherein the second indication information indicates the terminal apparatus to stop performing inter-frequency measurement in the measurement gap.

15. The method according to claim 11 or 14, wherein the second indication information is comprised in DCI, the DCI comprises a second bit, and when the second bit is a second value, it indicates the terminal apparatus to stop performing inter-frequency measurement in the measurement gap.

16. The method according to any one of claims 10 to 15, wherein the first information is an SR; or the first information is a BSR, and a data amount indicated by the BSR is greater than 0.

17. The method according to any one of claims 10 to 16, wherein a priority of a logical channel carrying the first information is greater than or equal to a first threshold; or a priority of a logical channel carrying the first information is greater than or equal to a priority of at least one other logical channel of a transmission service.

18. A communication apparatus, wherein the communication apparatus comprises a processing unit and a transceiver unit, and the processing unit is coupled to the transceiver unit, to perform the method according to any one of claims 1 to 3 or claims 6 to 9, perform the method according to claim 4 or 5 or any one of claims 6 to 9, perform the method according to any one of claims 10 to 12 or claims 15 to 17, or perform the method according to claim 13 or 14 or any one of claims 15 to 17.

19. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 3 or claims 6 to 9, cause the communication apparatus to perform the method according to claim 4 or 5 or any one of claims 6 to 9, cause the communication apparatus to perform the method according to any one of claims 10 to 12 or claims 15 to 17, or cause the communication apparatus to perform the method according to claim 13 or 14 or any one of claims 15 to 17.

20. A computer-readable storage medium, wherein the computer-readable storage medium is configured to store a computer program, and when the computer program is run on a computer, the computer is caused to perform the method according to any one of claims 1 to 3 or claims 6 to 9, the computer is caused to perform the method according to claim 4 or 5 or any one of claims 6 to 9, the computer is caused to perform the method according to any one of claims 10 to 12 or claims 15 to 17, or the computer is caused to perform the method according to claim 13 or 14 or any one of claims 15 to 17.

21. A computer program product, wherein the computer program product comprises a computer program, and when the computer program is run on a computer, the computer is caused to perform the method according to any one of claims 1 to 3 or claims 6 to 9, the computer is caused to perform the method according to claim 4 or 5 or any one of claims 6 to 9, the computer is caused to perform the method according to any one of claims 10 to 12 or claims 15 to 17, or the computer is caused to perform the method according to claim 13 or 14 or any one of claims 15 to 17.

22. A chip system, wherein the chip system comprises:
a processor and an interface, the processor is configured to invoke instructions from the interface and run the instructions, and when the processor executes the instructions, the method according to any one of claims 1 to 3 or claims 6 to 9 is implemented, the method according to claim 4 or 5 or any one of claims 6 to 9 is implemented, the method according to any one of claims 10 to 12 or claims 15 to 17 is implemented, or the method according to claim 13 or 14 or any one of claims 15 to 17 is implemented.

23. A communication system, comprising a terminal apparatus and a network apparatus, wherein
the terminal apparatus is configured to perform the method according to any one of claims 1 to 3 or claims 6 to 9; and
the network apparatus is configured to perform the method according to claim 4 or 5 or any one of claims 6 to 9.

24. A communication system, comprising a terminal apparatus and a network apparatus, wherein
the terminal apparatus is configured to perform the method according to any one of claims 10 to 12 or claims 15 to 17; and
the network apparatus is configured to perform the method according to claim 13 or 14 or any one of claims 15 to 17.
